# EUROPEAN PATENT SPECIFICATION

(11) **EP 2 665 734 B1**
(45) Date of publication and mention of the grant of the patent: **29.06.2016**
(21) Application number: 12701856.2
(22) Date of filing: 23.01.2012
(51) Int. Cl.: C07F 9/38, C07F 9/58

(54) **METHOD FOR THE MANUFACTURE OF COMPOUNDS CONTAINING AN alpha-OXY PHOSPHORUS GROUP**
VERFAHREN ZUR HERSTELLUNG VON VERBINDUNGEN MIT EINER ALPHA-OXY-PHOSPHORGRUPPE
PROCÉDÉ POUR LA FABRICATION DE COMPOSÉS CONTENANT UN GROUPE alpha -OXY-PHOSPHORÉ

(30) Priority: 21.01.2011 EP 11151659
(43) Date of publication of application: 27.11.2013
(73) Proprietor: Straitmark Holding AG, 6300 Zug (CH)
(72) Inventor: BURCK, Sebastian R., W., B-1348 Louvain-La-Neuve (BE); COGELS, Samuel, Corentin, B-1050 Ixelles (BE); NOTTÉ, Patrick, B-1300 Wavre (BE)
(74) Representative: Rippel, Hans Christoph
(86) International application number: PCT/EP2012/050960
(87) International publication number: WO 2012/098255

(56) References cited:
- WO-A1-2004/067541
- WO-A1-2010/136575
- WO-A2-2007/023342
- GB-A- 1 212 931
- KIECZYKOWSKI G R: "Preparation of (4-amino-1-hydroxybutylidene)bisphosphonic acid sodium salt, MK217 (ALENDRONATE SODIUM). AN IMPROVED PROCEDURE FOR THE PREPARATION OF 1-HYDROXY-1,1,-BISPHOSPHONIC ACIDS", JOURNAL OF ORGANIC CHEMISTRY, AMERICAN CHEMICAL SOCIETY, EASTON.; US, vol. 60, no. 25, 1 January 1995 (1995-01-01), pages 8310-8312, XP002162672, ISSN: 0022-3263, DOI: DOI:10.1021/JO00130A036

## Description

This invention pertains to a method for the manufacture of compounds containing an α-oxy phosphorus group having the formula:

R³[-O-C(R¹)(R²)ₘ(P(O)R^{a}R^{b})₂₋ₘ]ₙ -III-

comprising the steps of reacting a compound containing an α-oxy-carboxylic acid group selected from:
glycolic acid;
diglycolic acid;
lactic acid;
methoxyacetic acid;
sodium methoxyacetate;
butoxyacetic acid;
3,6-dioxaheptanoic acid;
3,6,9-trioxadecanoic acid;
3,6-dioxadodecanoic acid;
3,6,9-trioxaundecane-1,11-dioic acid;
5-chloro-3-oxapentanoic acid;
5-amino-3-oxapentanoic acid;
5-phthalimido-3-oxapentanoic acid;
2-tetrahydrofuroic acid;
methoxy-phenyl-acetic acid;
2-methoxy-butane-1,4-dioic acid;
potassium trans-phenylglycidate;
2-allyloxy-propionic acid;
2,2,2-trifluoroethoxyacetic acid;
and a P-O component having at least one P-O-P moiety, whereby at least one phosphorus has the +3 oxidation state, whereby the second phosphorus of the P-O-P moiety in the P-O component has a +3 or +5 oxidation state,
and whereby at least 20 mol% of the total P atoms in the P-O component are at the +3 oxidation state,
by adding the P-O component to the compound containing an α-oxy carboxylic acid group, or the reverse, in an equivalent ratio of α-oxy carboxylic acid functions in the compound containing an α-oxy carboxylic acid group : P(III)-O-P(III,V) moieties in the P-O component of from 1 : 6 to 2 : 1;
wherein R^{a} and R^{b} are independently selected from a C₁₋₂₀ hydrocarbon chain in branched or linear configuration; a silyl group independently substituted by C₁₋₂₀ hydrocarbon groups in branched, linear, cyclic or aromatic configuration; or OR" or N(R")₂ wherein R" can be selected from a C₁₋₂₀ hydrocarbon chain in branched or linear configuration or a silyl group independently substituted by C₁₋₂₀ hydrocarbon groups in branched, linear, cyclic or aromatic configuration; if R³ or R^{b} is a N(R")₂ group, then the two R" groups can be connected together with one R" group being a C₁₋₂₀ hydrocarbon chain in branched or linear configuration and the other R" being a direct bond; R^{a} and R^{b} can be connected, then R^{a} is a C₁₋₂₀ hydrocarbon chain in branched or linear configuration and R^{b} is a direct bond; if R^{a} and R^{b} are OR" groups, then R" of the first OR" group can be a C₁₋₂₀ hydrocarbon chain in branched or linear configuration and the R" of the second OR" group a direct bond; if R^{a} and R^{b} are N(R")₂ groups, then one R" group of the first N(R")₂ group can be a C₁₋₂₀ hydrocarbon chain in branched or linear configuration and one R" of the second N(R")₂ group is a direct bond to the R"-group of the first N(R")₂ group; or
R^{a} and/or R^{b} are OM'; m and n can be 1;
M' is represented by H or alkaline, earth alkaline, ammonium or protonated amine species;
R¹ is selected from: H, methyl, phenyl, or linked to R³ to form a OC₂ or OC₄ ring ;
R² is H;
R³ is selected from H, optionally substituted alkyl, or is linked to R¹,

Further described is a method for the manufacture of compounds containing an α-oxy phosphorus group, having the formula:

-O¹-C¹-P¹(O)< -I-

by reacting a P-O component having at least one P-O-P moiety, whereby at least one phosphorus has the +3 oxidation state, whereby the second phosphorus of the P-O-P moiety in the P-O component has a +3 or +5 oxidation state, by adding the P-O component to a compound containing an α-oxy carboxylic acid group (normal mode) in an equivalent ratio of α-oxy carboxylic acid functions in the compound containing an α-oxy carboxylic acid group : P(III)-O-P(III,V) moieties in the P-O component of from 1 : 6 to 2 : 1 or the reverse by adding the compound containing an α-oxy carboxylic acid group to the P-O component (reverse mode). In both modes of addition, normal and reverse, selected levels of water can be added at the end of the reaction and the compounds containing an α-oxy phosphorus group formed are recovered. The reaction releases carbon monoxide as a result of the conversion of the α-oxy carboxylic acid function. The α-oxy phosphorus derivatives accessible by this method are members of the general compound classes of phosphine oxide derivatives R₃P(O), phosphinic acid derivatives R₂P(O)OH or phosphonic acid derivatives RP(O)(OH)₂.

The prior art pertaining to organic phosphonates, including α-oxy phosphonic acids that are mainly addressed by this invention, is crowded and translates a prevailing interest in developing novel technologies, such as manufacturing arrangements better adapted to generate unique benefits. The art frequently amounts to multistep arrangements which will generally yield phosphonates of marginal selectivity, purity and can require cumbersome multistep processing sequences.

GB patent 1212931 describes the preparation of alkoxyalkyl phosphonic acids starting from bis(chloroalkyl) phosphonic acids with aqueous NaOH or ethanolic NaOEt. Abramov et al., Zhurnal Obshchei Khimii (1951), 21, 2011-16, divulge the action of halogen substituted ethers on the sodium salts of bis(2-alkoxyethyl)phosphorous acids to thus yield a mixture of compounds including α-oxy phosphonates. Gutierrez et al., explains the dealkylation of phosphonate esters with chlorotrimethylsilane, Nucleosides, Nucleotides & Nucleic acids (2001), 20(4-7), 1299-1302. The dealkylation is conducted at elevated temperature and can lead to α-oxy phosphonic acids.

Petrov et al., Obshchei Khimii (1980), 50(5), 1021-6, pertains to the formation of α-oxy phosphonates via the alkoxymethylation of dialkyl, ethylene and diphenyl chlorophosphites with dialkyl formols. Horiuchi et al. Kogyo Kagaku Zasshi (1966), 69(7), 1302-1306, explains the synthesis and recites properties of alkoxymethyl phosphonic acids. The synthesis is a complex multistep arrangement.

While thus the synthesis of α-oxy phosphonates is known, this state of the art is of little economical value considering the frequently complex multistep methods and the fact that low yields, low purity and low selectivity are achieved. This entails the formation of significant levels of low-value products.

It is a major object of this invention to provide a one-step method for the manufacture of compounds containing an α-oxy phosphorus group starting from the corresponding compounds containing an α-oxy carboxylic acid group. It is another objective of this invention to provide a method for the manufacture of compounds containing an α-oxy phosphorus group with high yields of the phosphorus derivatives. Yet another objective of the invention aims at selecting reagents which can be used to yield compounds containing an α-oxy phosphorus group in high yield and purity. Still another objective of this invention contemplates the manufacture of compounds containing an α-oxy phosphorus group in a one step procedure with high purity and selectivity. Yet another objective of this invention relates to generating a manufacturing method which can be operated under absence of halogens. Still another aim of the invention resides in defining a method arrangement capable of yielding specific compounds containing an α-oxy phosphorus group under virtual exclusion of LOOPS to thus ensure a safe operation capable of producing high yields. Still another objective of this invention pertains to generating compounds containing an α-oxy phosphorus group with a large variety of substituent on the α-oxy fragment. It is another desirable objective of this invention to provide a method for producing compounds with low levels of by-product formation except for the formation of carbon monoxide, which can be recovered conveniently and used.

The term "percent" or "%" as used throughout this application stands, unless defined otherwise, for "percent by weight" or "% by weight". The terms "phosphonic acid" and "phosphonate" are also used interchangeably depending, of course, upon the medium prevailing alkalinity/acidity conditions. The term "ppm" stands for "parts per million". The terms "P₂O₃" and "P₄O₆" and the terms "P₂O₅" and "P₄O₁₀" can be used interchangeably. Unless defined otherwise, pH values are measured at 25 °C on the reaction medium as such. The term "P₄O₆" embraces neat P₄O₆ in the liquid state, solid P₄O₆ and gaseous P₄O₆. The term "ambient" with respect to temperature and pressure means terrestrial conditions usually prevailing at sea level, i.e. temperature is between 18°C-25°C and pressure stands for 990-1050 mm Hg. The term "adjuvant" defines classes of compounds which can be present during the reaction to provide benefits while being unaffected as a result of the reaction. The term "compounds containing an α-oxy phosphorus group" embraces, when phosphinic or phosphonic acid derivatives are obtained, the free acid as such, the corresponding salts or partial salts and the corresponding esters or partial esters and mixtures thereof. The term "LOOPS" means "low oxides of phosphorus". Reported yields have been determined by ³¹P-NMR. The constitution of all compounds has been established by combined ³¹P- and ¹H-NMR studies.

The term "cyclic" embraces cyclic, alkylcyclic, alkylenecyclic, alkylalkylenecyclic and cyclic alkyl e.g. methylene cyclopentyl or methylcyclopentyl or methylmethylenecyclopentyl or cyclopentyl. The term "aromatic" embraces aromatic, alkylaromatic, alkylenearomatic and alkylalkylenearomatic. The terms "cyclic" or "aromatic" imply with respect to "cyclic" a structure of minimum 3 carbon atoms, with respect to "aromatic" a structure of at least 6 carbon atoms. The terms "heterocyclic" and "heteroaromatic" imply the formal replacement of 1, 2 or 3 carbon atoms in a "cyclic" or "aromatic" structure by a heteroatom of e.g. N, O or S or combinations thereof. The term "heteroaromatic" can also be represented by 5 membered rings, wherein at least one carbon atom is replaced by N, O or S. The term "equivalent ratio" means equivalent molar ratio.

The term "compound containing an α-oxy carboxylic acid group" means that the described compound can either be a molecular or a polymeric structure wherein one or more α-oxy carboxylic acid groups are present. Consequently, the term "compound containing an α-oxy phosphorus group" means that the described compound can either be a molecular or a polymeric structure wherein one or more α-oxy phosphorus groups are present. This procedure provides a method for the conversion of at least one α-oxy carboxylic acid function of a compound containing an α-oxy carboxylic acid group into an α-oxy phosphorus group.

The foregoing and other objectives can now be met by reacting a compound containing an α-oxy carboxylic acid group with a P-O component containing at least one P(III)-OP(III,V) moiety, whereby at least one phosphorus has the +3 oxidation state. The α-oxy carboxylic acid group in the compound containing an α-oxy carboxylic acid group can be represented by the free acid or by partially or fully neutralized species thereof. Suitable counter ions for the neutralized α-oxy carboxylic acid group are alkaline, earth alkaline, ammonium and protonated amine species. The use of neutralized or partially neutralized α-oxy carboxylic acid species requires an additional adjuvant with a lower pKa than the corresponding value of the α-oxy carboxylic acid group, which is added at the outset of the reaction in an amount at least sufficient to convert all the neutralized or partially neutralized carboxylic acid functions into the corresponding free carboxylic acid functions.

Described is a method for the manufacture of compounds containing an α-oxy phosphorus group having the formula:

-O¹-C¹-P¹(O)< -I-

comprising the steps of reacting a compound containing an α-oxy-carboxylic acid group having a formula:

-O¹-C¹-COOM' -II-

and a P-O component having at least one P-O-P moiety, whereby at least one phosphorus has the +3 oxidation state, whereby the second phosphorus of the P-O-P moiety in the P-O component has a +3 or +5 oxidation state, and whereby at least 20 mol% of the total P atoms in the P-O component are at the +3 oxidation state; by adding the P-O component to the compound containing an α-oxy carboxylic acid group, or the reverse, in an equivalent ratio of α-oxy carboxylic acid functions in the compound containing an α-oxy carboxylic acid group : P(III)-O-P(III,V) moieties in the P-O component of from 1 : 6 to 2 : 1 at a temperature of from 10°C to 200°C for a total reaction time of from 1 minute to 7 days;
wherein the oxygen atom O¹ carries two substituents whereby the first substituent is C¹ and the second can be selected from a H or a C atom carrying three further substituents; wherein the carbon atom C¹ carries four substituents whereby the first substituent is O¹, the second is the P¹(O)< group in formula -I- or the COOM' group in formula -II- and the third and fourth can be independently selected from a H or a C atom; wherein the phosphorus atom P¹ carries four substituents whereby the first substituent is C¹, the second is the O atom and the third and fourth can be independently selected from H, a C group, an 0 group carrying one further substituent selected from a H, a C or a Si group, or a N group carrying two further substituents independently selected from a H or C group; with the limitation that only one substituent of the third and fourth substituent of P¹ can be a H group; wherein M' is represented by H or alkaline, earth alkaline, ammonium or protonated amine species.

In more detail, described is a method for the manufacture of compounds containing an α-oxy phosphorus group selected from the formulae:

R³[-O-C(R¹)(R²)ₘ(P(O)R^{a}R^{b})₂₋ₘ]ₙ -III-

R³[-C(OR¹)(R²)ₘ(P(O)R^{a}R^{b})₂₋ₘ]ₙ -IV-

R⁶[[-(W-O)-C(R⁷)ₖ(P(O)R^{a}R^{b})₂₋ₖ]ₐ-X-C(R⁴)ₘ(P(O)R^{a}R^{b})₂₋ₘ-O]ₙ¹-R⁵ -V-

R⁸[-E-C(R⁹)ₖ(P(O)R^{a}R^{b})₂₋ₖ-O-C(R¹⁰)ₘ(P(O)R^{a}R^{b})₂₋ₘ]ₙ²-R¹¹ -VI-

comprising the steps of reacting a compound containing an α-oxy-carboxylic acid group having a formula selected from:

R³[-(O-C(R¹)(R²)ₘ(COOM')₂₋ₘ]ₙ -VII-

R³[-C(OR¹)(R²)ₘ(COOM')₂₋ₘ]ₙ -VIII-

R⁶[[-(W-O)-C(R⁷)ₖ(COOM'))₂₋ₖ]ₐ-X-C(R⁴)ₘ(COOM'))₂-m-O]ₙ¹-R⁵ -IX-

R⁸[-E-C(R⁹)ₖ(COOM')₂₋ₖ-O-C(R¹⁰)-(COOM')₂₋ₘ]ₙ²-R¹¹ -X-

and a P-O component having at least one P-O-P moiety, whereby at least one phosphorus has the +3 oxidation state, whereby the second phosphorus of the P-O-P moiety in the P-O component has a +3 or +5 oxidation state, and whereby at least 20 mol% of the total P atoms in the P-O component are at the +3 oxidation state;
by adding the P-O component to the compound containing an α-oxy carboxylic acid group, or the reverse, in an equivalent ratio of α-oxy carboxylic acid functions in the compound containing an α-oxy carboxylic acid group : P(III)-O-P(III,V) moieties in the P-O component of from 1 : 6 to 2 : 1 at a temperature of from 10°C to 200°C for a total reaction time of from 1 minute to 7 days;
wherein the R^{a} and R^{b} groups are defined below if these groups are already present in the used P-O component (see P-O component section), otherwise R^{a} and/or R^{b} are OM'; a, k and m can be independently selected from 0 or 1; n, n¹ and n² are independently selected integers from 1 to 100000; M' is represented by H or alkaline, earth alkaline, ammonium or protonated amine species;
E, W and X can be independently selected from hydrocarbon groups in branched, linear, cyclic or heterocyclic configuration having from 1 to 100 carbon atoms; W can also be an alkylenearomatic or alkyleneheteroaromatic having from 1 to 100 carbon atoms, provided that there are at least 2 alkylene carbon atoms between the aromatic or heteroaromatic groups and the oxygen atom directly connected to W in formulae -V- and -IX-; in addition, W can also be a direct bond with the limitation, that if R⁶ is an aromatic or heteroaromatic group, then there must be at least 2 alkylene carbon atoms between the directly connected oxygen atom and the aromatic or heteroaromatic group; in addition, E and X can also be a direct bond; in addition, E and X can be a heteroaromatic or aromatic group having from 1 to 100 carbon atoms; R¹, R², R⁴, R⁶, R⁷, R⁸, R⁹, R¹⁰ and R¹¹ are independently selected from: H, hydrocarbon groups in branched, linear, cyclic, aromatic, heterocyclic or heteroaromatic configuration having from 1 to 100 carbon atoms; when R⁶ is an aromatic or heteroaromatic group, then W must comprise at least 2 alkylene carbon atoms between the heteroaromatic or aromatic group and the directly connected oxygen atom; R⁵ can be selected from H, hydrocarbon groups in branched, linear, cyclic, heterocyclic, configurations having from 1 to 100 carbon atoms; R⁵ can also be an aromatic or heteroaromatic having from 1 to 100 carbon atoms, provided that there are at least 2 alkylene carbon atoms between the heteroaromatic or aromatic group and the directly connected oxygen atom; when R¹ in formulae -IV- and -VIII- contains an aromatic or heteroaromatic group, then there must be at least 2 alkylene carbon atoms between the aromatic or heteroaromatic group and the oxygen atom;
R³ is selected from hydrocarbon groups in branched, linear, cyclic or heterocyclic configuration having from 1 to 200000 carbon atoms, whereby [-O-C(R¹)(R²)ₘ(P(O)R^{a}R^{b})₂₋ₘ] in formula -III- and [-C(OR¹)(R²)ₘ(P(O)R^{a}R^{b})₂₋ₘ] in formula -IV- can be distributed on the carbon chain of R³ by mono or di substitution on the individual R³ carbon atoms, evenly, randomly or in an alternating fashion or combinations thereof with the proviso that n is an integer which is equal to or smaller than 2 times the number of carbon atoms in R³;
when n = 1, R³ can be H or Y-B[-O-A]ₓ- wherein x is 0-50; wherein A is selected from linear and branched hydrocarbons having from 2 to 100 carbon atoms and B is selected from hydrocarbon groups in branched, linear, cyclic, heterocyclic, aromatic or heteroaromatic configuration having from 1 to 100 carbon atoms; A can be selected from linear and branched hydrocarbons having from 2 to 100 carbon atoms substituted partly or fully with F and/or CF₃ groups; Y is selected from hydrocarbon groups in branched, linear, cyclic, heterocyclic, aromatic or heteroaromatic configuration having from 1 to 100 carbon atoms; wherein Y can be selected from hydrocarbon groups in linear configuration having from 1 to 100 carbon atoms substituted partly or fully with F and/or CF₃ groups; when Y is an aromatic or heteroaromatic group and x is 0, then B must comprise at least 2 alkylene carbon atoms between the heteroaromatic or aromatic group and the directly connected oxygen atom; wherein Y can represent: H, an unsubstituted or substituted double bond, an unsubstituted or substituted triple bond, -COZ, -O-COZ, -OR, -NR₂, -SiR'₃, -Si(OR')₃, -B(OR')₂, -P⁺R'₃, -N⁺R₃, -CN, halogen, -P(O)_{z}Z₂, -NR-COZ, -N(COR)₂, -NR-CSZ, -NR-C(NR)NR₂, -CSZ, -O- CSZ, -NR-SO₂R, -SO_{y}Z, -O-SO_{y}Z, wherein z is 0 or 1, wherein y is 0, 1 or 2, wherein Z is H, OH, alkyl, aromatic, heterocyclic and heteroaromatic, -OR, -NH₂,-NR₂,-NHR and R wherein R is independently selected from H, hydrocarbon groups in branched, linear, cyclic, heterocyclic, aromatic or heteroaromatic configuration having from 1 to 100 carbon atoms; R' is independently selected from hydrocarbon groups in branched, linear, cyclic, heterocyclic, aromatic or heteroaromatic configuration having from 1 to 100 carbon atoms, if at least two R or R' groups are present in the functional group, then these groups can be connected, whereby one R or R' group is a direct bond and the other is a hydrocarbon group in branched, linear, cyclic, heterocyclic, aromatic or heteroaromatic configuration having from 1 to 100 carbon atoms; B can also be a direct bond when Y is H or a hydrocarbon group in branched, linear, cyclic, heterocyclic, aromatic or heteroaromatic configuration having from 1 to 100 carbon atoms;
when n is 1, R³ can be connected to R¹ and be a direct bond, while R¹ is C₁₋₁₀ alkylene group in linear configuration;
when m is 1, R¹ and R² can also be connected, with R² being a direct bond and R¹ being a C₂₋₁₂ linear alkylene group;
when R⁵ is connected to R⁶ by a direct bond, then W and X can be independently selected from a C₁₋₁₀ linear alkylene group;
when m and n¹ are 1, R⁵ can be connected to R⁴ and be a direct bond, while R⁴ is a C₁₋₁₀ linear alkylene group;
when a, k and n¹ are 1, X can be a C₁₋₁₀ linear alkylene group or a direct bond and R⁵ can be connected either to R⁷ and be a direct bond while R⁷ is a C₁₋₁₀ linear alkylene group or can be connected to R⁷ by a direct bond;
when m and n¹ are 1, W and X can be independently selected from a C₁₋₁₀ linear alkylene group or a direct bond and R⁶ can be connected to R⁴ and be a direct bond while R⁴ is C₂₋₁₀ linear alkylene group;
when a, k and n¹ are 1, W can be a C₁₋₁₀ linear alkylene group or a direct bond and R⁶ can be connected to R⁷ and be a direct bond while R⁷ is C₁₋₁₀ linear alkylene group;
when m and k are 1, X can be a C₁₋₁₀ linear alkylene group or a direct bond and R⁴ and R⁷ can be connected together by a direct bond if X is comprised of at least 1 carbon atom, or R⁴ and R⁷ can be connected with R⁴ being a direct bond and R⁷ being a C₁₋₁₀ linear alkylene group;
R⁸ can be connected to R¹¹ by a direct bond, while E is a C₁₋₁₀ linear alkylene group or a direct bond;
when k and n² are 1, E can be C₁₋₁₀ linear alkylene group or a direct bond and R⁸ and R⁹ can be connected together by a direct bond if E is having at least 2 carbon atoms, or R⁸ and R⁹ can be connected with R⁸ being a direct bond and R⁹ being a C₂₋₁₀ linear alkylene group;
when m and n² are 1, E can be a C₁₋₁₀ linear alkylene group or a direct bond and R⁸ and R¹⁰ can be connected together by a direct bond or R⁸ and R¹⁰ can be connected with R⁸ being a direct bond and R¹⁰ being a C₁₋₁₀ linear alkylene group;
when k and n² are 1, R¹¹ can be connected to R⁹ and be a direct bond while R⁹ is C₁₋₁₀ linear alkylene group or R¹¹ can be connected to R⁹ by a direct bond;
when m and n² are 1, R¹¹ can be connected to R¹⁰ and be a direct bond, while R¹⁰ is C₂₋₁₀ linear alkylene group;
when k and m are 1, R⁹ and R¹⁰ can be connected together by a direct bond or with R¹⁰ being a direct bond and R⁹ being C₁₋₁₂ linear alkylene group;
followed by adding, after completing the reaction of the P-O component with the compound containing an α-oxy carboxylic acid group, a minimum number of moles of water equal to the difference between the number of equivalents of all P-O-P linkages in the P-O component and the number of equivalents of OH groups in the α-oxy carboxylic acid function of the compound containing an α-oxy carboxylic group acid and recovering the product formed.

Preferably n, n¹ and n² are independently selected integers from 1 to 15000; preferably E, W and X can be selected from hydrocarbon groups in branched, linear, cyclic, heterocyclic, heteroaromatic or aromatic configuration having from 1 to 20 carbon atoms;
preferably R¹, R², R⁴, R⁶, R⁷, R⁸, R⁹, R¹⁰ and R¹¹ are independently selected from: H, hydrocarbon groups in branched, linear, cyclic, aromatic, heterocyclic or heteroaromatic configuration having from 1 to 20 carbon atoms;
preferably R⁵ can be selected from H, hydrocarbon groups in branched, linear, cyclic, heterocyclic, heteroaromatic or aromatic configurations having from 1 to 20 carbon atoms;
preferably R³ is selected from hydrocarbon groups in branched, linear, cyclic or heterocyclic configuration having from 1 to 30000 carbon atoms; when n = 1, R³ can be H or Y-B[-O-A]ₓ- wherein A is selected from linear and branched hydrocarbons having preferably from 2 to 10 carbon atoms and B is selected from hydrocarbon groups in branched, linear, cyclic, heterocyclic, aromatic or heteroaromatic configuration having from 1 to 50 carbon atoms; wherein A can be selected from linear and branched hydrocarbons having from 2 to 10 carbon atoms substituted partly or fully with F and/or CF₃ groups; wherein Y can represent: H, an unsubstituted or substituted double bond, an unsubstituted or substituted triple bond, -COZ, -O-COZ, -OR, -NR₂, -SiR₃,-Si(OR')₃, -B(OR')₂, -P⁺R^{'}₃, -N⁺R₃, -CN, halogen, -P(O)_{z}Z₂, -NR-COZ, -N(COR')₂, -NR-CSZ, -NR-C(NR)NR₂, -CSZ, -O-CSZ, -SO_{y}Z, -O-SO_{y}Z, -NR-SO₂R', wherein z is 0 or 1, wherein y is 0, 1 or 2, wherein Z is H, OH, alkyl, aromatic, heterocyclic and heteroaromatic, -OR, -NH₂, -NR₂, -NHR and R wherein R is independently selected from H, hydrocarbon groups in branched, linear, cyclic, heterocyclic, aromatic or heteroaromatic configuration having from 1 to 20 carbon atoms; R is independently selected from hydrocarbon groups in branched, linear, cyclic, heterocyclic, aromatic or heteroaromatic configuration having from 1 to 20 carbon atoms, if at least two R or R' groups are present in the functional group then these groups can be connected whereby one R or R' group is a direct bond and the other is a hydrocarbon group in branched, linear, cyclic, heterocyclic, aromatic or heteroaromatic configuration having from 1 to 20 carbon atoms; wherein x is preferably 0-30.

More preferred n, n¹ and n² are independently selected integers from 1 to 5000;
more preferred E, W and X can be selected from hydrocarbon groups in branched, linear, cyclic, heterocyclic, heteroaromatic or aromatic configuration having from 1 to 10 carbon atoms;
more preferred R¹, R², R⁴, R⁷, R⁸, R⁹, R¹⁰ and R¹¹ are independently selected from: H, hydrocarbon groups in branched, linear, cyclic, aromatic, heterocyclic or heteroaromatic configuration having from 1 to 10 carbon atoms; more preferred R⁵ can be selected from H, hydrocarbon groups in branched, linear, cyclic, heterocyclic, heteroaromatic or aromatic configurations having from 1 to 10 carbon atoms;
more preferred R³ is selected from hydrocarbon groups in branched, linear, cyclic or heterocyclic configuration having from 1 to 10000 carbon atoms;
when n = 1, R³ can be H or Y-B[-O-A]ₓ- wherein x is 0-20; wherein A is selected from linear and branched hydrocarbons having more preferred from 2 to 6 carbon atoms and B is selected from hydrocarbon groups in branched, linear, cyclic, heterocyclic, aromatic or heteroaromatic configuration having from 1 to 50 carbon atoms; wherein A can be selected from linear and branched hydrocarbons having from 2 to 6 carbon atoms substituted partly or fully with F and/or CF₃ groups; Y is selected from hydrocarbon groups in branched, linear, cyclic, heterocyclic, aromatic or heteroaromatic configuration having from 1 to 50 carbon atoms; wherein Y can be selected from hydrocarbon groups in linear configuration having from 1 to 50 carbon atoms substituted partly or fully with F and/or CF₃ groups; wherein Y can represent: H, an unsubstituted or substituted double bond, an unsubstituted or substituted triple bond, -COZ, -OR, -NR₂, -CN, -Cl, -Br, -I, -O-SO_{y}Z, -N(COR')₂, wherein y is 0, 1 or 2, wherein Z is H, OH, alkyl, aromatic, heterocyclic and heteroaromatic, -OR, -NH₂,-NR₂,-NHR and R wherein R is independently selected from H, hydrocarbon groups in branched, linear, cyclic, heterocyclic, aromatic or heteroaromatic configuration having from 1 to 10 carbon atoms; R is independently selected from hydrocarbon groups in branched, linear, cyclic, heterocyclic, aromatic or heteroaromatic configuration having from 1 to 10 carbon atoms, if at least two R or R' groups are present in the functional group then these can be connected whereby one R or R' group is a direct bond and the other is a hydrocarbon group in branched, linear, cyclic, heterocyclic, aromatic or heteroaromatic configuration having from 1 to 10 carbon atoms; B can also be a direct bond when Y is H or a hydrocarbon group in branched, linear, cyclic, heterocyclic, aromatic or heteroaromatic configuration having from 1 to 50 carbon atoms;
when n is 1, R³ can be connected to R¹ and be a direct bond, while R¹ is C₁₋₈ alkylene group in linear configuration;
when m is 1, R¹ and R² can also be connected with R² being a direct bond and R¹ being a C₂₋₈ linear alkylene group;
when R⁵ is connected to R⁶ by a direct bond, then W and X can be independently selected from a C₁₋₈ linear alkylene group;
when m and n¹ are 1, R⁵ can be connected to R⁴ and be a direct bond, while R⁴ is a C₁₋₈ linear alkylene group;
when a, k and n¹ are 1, X can be a C₁₋₁₀ linear alkylene group or a direct bond and R⁵ can be connected either to R⁷ and be a direct bond while R⁷ is a C₁₋₈ linear alkylene group or to R⁷ by a direct bond;
when m and n¹ are 1, W and X can be independently selected from a C₁₋₈ linear alkylene group or a direct bond and R⁶ can be connected to R⁴ and be a direct bond while R⁴ is C₂₋₈ linear alkylene group;
when a, k and n¹ are 1, W can be a C₁₋₈ linear alkylene group or a direct bond and R⁶ can be connected to R⁷ and be a direct bond while R⁷ is C₁₋₈ linear alkylene group;
when m and k are 1, X can be a C₁₋₈ linear alkylene group or a direct bond and R⁴ and R⁷ can be connected together by a direct bond if X is comprised of at least 1 carbon atom, or R⁴ and R⁷ can be connected with R⁴ being a direct bond and R⁷ being a C₁₋₈ linear alkylene group;
R⁸ can be connected to R¹¹ by a direct bond, while E is a C₁₋₈ linear alkylene group or a direct bond;
when k and n² are 1, E can be C₁₋₈ linear alkylene group or a direct bond and R⁸ and R⁹ can be connected together by a direct bond if E is having at least 2 carbon atoms, or R⁸ and R⁹ can be connected with R⁸ being a direct bond and R⁹ being a C₂₋₈ linear alkylene group;
when m and n² are 1, E can be a C₁₋₈ linear alkylene group or a direct bond and R⁸ and R¹⁰ can be connected together by a direct bond or R⁸ and R¹⁰ can be connected with R⁸ being a direct bond and R¹⁰ being a C₁₋₈ linear alkylene group;
when k and n² are 1, R¹¹ can be connected to R⁹ and be a direct bond while R⁹ is C₁₋₈ linear alkylene group or R¹¹ can be connected to R⁹ by a direct bond;
when m and n² are 1, R¹¹ can be connected to R¹⁰ and be a direct bond, while R¹⁰ is C₂₋₈ linear alkylene group;
when k and m are 1, R⁹ and R¹⁰ can be connected together by a direct bond or with R¹⁰ being a direct bond and R⁹ being C₁₋₈ linear alkylene group.

Most preferred compounds containing an α-oxy carboxylic acid group herein are: glycolic acid;
diglycolic acid;
lactic acid;
methoxyacetic acid;
sodium methoxyacetate;
butoxyacetic acid;
3,6-dioxaheptanoic acid;
3,6,9-trioxadecanoic acid;
3,6,9-trioxaundecane-1,11-dioic acid;
5-chloro-3-oxapentanoic acid;
5-amino-3-oxapentanoic acid;
5-phthalimido-3-oxapentanoic acid;
2-tetrahydrofuroic acid;
methoxy-phenyl-acetic acid;
2-methoxy-butane-1,4-dioic acid;
potassium trans-phenylglycidate;
2-allyloxy-propionic acid;
2,2,2-trifluoroethoxyacetic acid.

In some cases the aforementioned conversion of the compound containing an α-oxy carboxylic acid group does not lead to the expected corresponding compound containing an α-oxy phosphorus group, but to another compound containing an α-oxy phosphorus group specified by one of the formulae -I-, -III-, -IV-, -V- or -VI-. In these cases, the compound containing an α-oxy carboxylic acid group contains a labile function or group that is cleaved under the applied reaction conditions, but nevertheless allows the desired conversion to a compound containing an α-oxy phosphorus group. An example for such a conversion is the reaction of diglycolic acid specified by formula -X- with P₄O₆ yielding hydroxymethylenephosphonic acid specified by formula -III- (see experimental section for further details).

The P-O component is comprised of species containing at least one P-O-P moiety, wherein at least one phosphorus atom is in the oxidation state +3.

The P-O component can be obtained from compounds of the following classes:
Class 1: P₄O₆, P₄Oₙ (n = 7, 8, 9), anhydrides of formula R^{a}R^{b}P-O-PR^{a}R^{b};
Class 2: H₃PO₃, H₃PO₄, polyphosphoric acid, metaphosphoric acid, mono or dialkyl phosphate esters (R'O)P(O)(OH)₂ or (R'O)₂P(O)OH, phosphonic acids R'P(O)(OH)2, monoalkyl phosphonic esters R'P(O)(OR')H, resin bound phosphonic acids e.g. aminomethylene-phosphonic acid attached by a variable linker to macroporous polystyrene matrix e.g. QuadraPure™ AMPA from Reaxa, or inorganic bound phosphonic acids e.g. phosphonic acid attached by a variable linker to an inorganic support like e.g. silica e.g. POH1 from PhosphonicS;
Class 3: isohypophosphoric acid H(HO)P(O)-O-P(O)(OH)₂, pyrophosphorous acid H₄P₂O₅;
Class 4: POCl₃, PCl₅, P₂O₅;
Class 5: R^{a}R^{b}PCl, R^{a}PCl₂, PCl₃;
Class 6: R^{a}R^{b}P(O)H, R'P(O)(OH)H;
C!ass7: H₂O;
wherein R^{a} and R^{b} are independently selected from a C₁₋₂₀ hydrocarbon chain in branched, linear, cyclic, aromatic, heterocyclic or heteroaromatic configuration; a silyl group independently substituted by C₁₋₂₀ hydrocarbon groups in branched, linear, cyclic, aromatic, heterocyclic or heteroaromatic configuration; or OR" or N(R")₂ wherein R" can be selected from a C₁₋₂₀ hydrocarbon chain in branched, linear, cyclic, aromatic, heterocyclic or heteroaromatic configuration or a silyl group independently substituted by C₁₋₂₀ hydrocarbon groups in branched, linear, cyclic, aromatic, heterocyclic or heteroaromatic configuration; if R^{a} or R^{b} is a N(R")₂ group, then the two R" groups can be connected together with one R" group being a C₁₋₂₀ hydrocarbon chain in branched, linear, cyclic, aromatic, heterocyclic or heteroaromatic configuration and the other R" being a direct bond; R^{a} and R^{b} can be connected, then R^{a} is a C₁₋₂₀ hydrocarbon chain in branched, linear, cyclic, aromatic, heterocyclic or heteroaromatic configuration and R^{b} is a direct bond; if R^{a} and R^{b} are OR" groups, then R" of the first OR" group can be a C₁₋₂₀ hydrocarbon chain in branched, linear, cyclic, aromatic, heterocyclic or heteroaromatic configuration and the R" of the second OR" group a direct bond; if R^{a} and R^{b} are N(R")₂ groups, then one R" group of the first N(R")₂ group can be a C₁₋₂₀ hydrocarbon chain in branched, linear, cyclic, aromatic, heterocyclic or heteroaromatic configuration and one R" of the second N(R")₂ group is a direct bond to the R"-group of the first N(R")₂ group;
either as individual species containing at least one P-O-P moiety with at least one phosphorus atom in the oxidation state +3, c.f. all compounds listed in Classes 1 and 3; or by combination of two or more compounds from at least two different classes, that will form the necessary P-O-P moieties, with at least one phosphorus atom in the oxidation state +3, whereby in cases with three or more involved compounds, the individual compounds can be also chosen from the same class, as long as one compound from another class is utilised.

Possible combinations of classes are for example:
Class 1 with Classes 2, 3, 4 and 7, 5 and 7, 6, 7;
Class 2 with Classes 3, 4, 4 and 7, 5, 5 and 7;
Class 3 with Classes 4, 4 and 7, 5, 5 and 7, 6;
Class 4 with Classes 5 and 7, 6, 6 and 7;
Class 5 with Classes 6, 7.

In general, P-O-P moieties can be already present in the P-O component and their total number will remain unchanged by the addition of further compounds of the classes 1-6. The reaction of one P¹-O-P² bond with a P³-OH or P³(O)H function will only lead to a metathesis and produce e.g. P¹-O-P³ and P²-OH or P²(O)H functions. The only exception represents the combination of such a compound with H₂O from Class 7, which will cleave a P(III)-O-P(III,V) moiety into two P-OH functions and thereby decrease the number of available P(III)-O-P(III,V) moieties. New P-O-P moieties are formed either by reacting P-OH or P(O)H functions with a P-Cl function under the elimination of one molecule of HCl, or by reacting two P-Cl functions with one molecule of H₂O under elimination of two molecules of HCl. The reaction of one P-Cl function with one molecule of H₂O will produce one P-OH or P(O)H function and one molecule of HCl. The application of this connection scheme allows the theoretical calculation of available P(III)-O-P(III,V) moieties in the P-O component starting from the used compounds of the classes.

For example P₄O₆ from Class 1 can be combined with H₂O from Class 7 to form a P-O component containing particularly 2, 3, 4 and 5 P-O-P moieties, respectively. This partially hydrolysed P₄O₆ can lead to products containing 2, 3, 4 or 5 P-O-P moieties or polycondensates with a higher number of P-O-P moieties as described in Phosphorus, Sulfur and Silicon, 1994, Vol. 93-94, page 373. The P-O component can be represented by uniform ingredients having e.g. a uniform number of P-O-P moieties or by mixtures represented by species with variable numbers of P-O-P moieties, as may occur in partially hydrolysed species of P₄O₆. The level of water to be employed is limited (in molar terms) to 5 H₂O per P₄O₆.

Other suitable P-O components can be prepared starting from PCl₃ (Class 5) by partial hydrolysis with H₂O (Class 7); by reacting PCl₃ (Class 5) and phosphorous acid (Class 2); by reacting P₄O₆ (Class 1) and phosphorous acid (Class 3); or by reacting PCl₃ (Class 5) with P₄O₆ (Class 1) and selected quantities of H₂O (Class 7), so as to keep at least one P-O-P moiety. The P-O component can also be represented by species containing P-O-P moieties wherein at least one of the P is at a +3 oxidation state while the other is at a +5 oxidation state. Example of such discrete species are the isohypophosphoric acid (HO)HP(=O)-O-P(=O)(OH)₂ (Class 3) and P₄Oₙ with n = 7, 8 or 9 (Class 1). Apart from such discrete species, more complex product mixtures with phosphorus atoms in the +3/+5 oxidation state can be obtained. In such cases at least 20 mol%, preferably 40 mol%, of the total P atoms must be at a +3 oxidation state. The ratio of +3/+5 oxidation state of the phosphorus as well as the number of phosphorus atoms in the +3 oxidation state in these species can be determined routinely by ³¹P NMR. For example, such complex +3/+5 P-O components can be obtained by reaction of: P₄O₆ (Class 1) with phosphoric or polyphosphoric or meta-phosphoric acid (Class 2); by reaction of P₂O₅ (Class 4) with phosphorus acid (Class 2); by reaction of PCl₅ (Class 4) and PCl₃ (Class 5) or POCl₃ (Class 4) and PCl₃ (Class 5) or mixtures thereof with selected quantities of H₂O (Class 7) so as to keep at least one P-O-P moiety wherein both phosphorus atoms are at the +3 oxidation state, or wherein one of the phosphorus atoms is at the +3 oxidation state and the second phosphorus atom is at the +5 oxidation state.

In the event, chlorine containing starting materials, e.g. PCl₃, POCl₃ or PCl₅ or combinations thereof, are used, the level of chlorine in the P-O component shall be kept below 1000 ppm, usually below 500 ppm, preferably below 200 ppm, expressed in relation to the P-O material being 100%. Therefore, it is mandatory to hydrolyse all excess P-Cl bonds in the P-O component. This is achieved by the addition of an additional amount of H₂O calculated from the difference of available P-Cl functions and the amount of utilised P-OH and P(O)H groups and the two OH groups of H₂O, originating from the species of classes 2, 3, 6, 7. For the hydrolysis of every excess P-Cl group in the P-O component one molecule of H₂O is required.

The groups R^{a} and R^{b} in formulae -III-, -IV-, -V- and -VI- are introduced by the utilised phosphorus species as a result of the conversion. However, some phosphorus species mentioned in Classes 1, 2, 3, 5 and 6 do not contain the groups R^{a} and/or R^{b}, but can be nevertheless converted into one of the corresponding compounds containing an α-oxy phosphorus group described by formulae -III-, -VI-, -V- or -VI-, if this phosphorus species contains a phosphorus atom in the oxidation state +3. Such phosphorus species are for examples P₄O₆, PCl₃ and H₃PO₃. In such a case R^{a} and/or R^{b} in formulae -III-, -IV-, -V- or -VI- are OM' with M' being H or alkaline, earth alkaline, ammonium or protonated amine species.

The P-O component can be represented by P₄O₆ a substantially pure compound containing at least 85 %; preferably more than 90 %; more preferably at least 95 % and in one particular execution at least 97 % of P₄O₆. While tetraphosphorus hexa oxide, suitable for use within the context of this invention, can be manufactured by any suitable technology, in preferred executions the hexa oxide can be prepared in accordance with the process disclosed in WO 2009/068636 and/or EP 08 168 898.8, entitled "Process for the manufacture of P₄O₆ with improved yield". In detail, oxygen, or a mixture of oxygen and inert gas, and gaseous or liquid phosphorus are reacted in essentially stoichiometric amounts in a reaction unit at a temperature in the range from 1600 to 2000 K, by removing the heat created by the exothermic reaction of phosphorus and oxygen, while maintaining a preferred residence time of from 0.5 to 60 seconds followed by quenching the reaction product at a temperature below 700 K and refining the crude reaction product by distillation. The hexa oxide so prepared is a pure product containing usually at least 97 % of the oxide. The P₄O₆ so produced is generally represented by a material of high purity containing in particular low levels of elementary phosphorus, P₄, preferably below 1000 ppm, expressed in relation to the P₄O₆ being 100%. The preferred residence time is from 5 to 30 seconds, more preferably from 8 to 30 seconds. The reaction product can, in one preferred execution, be quenched to a temperature below 350 K. The term "liquid P₄O₆" embraces, as spelled out, any state of the P₄O₆.

Most preferred are P₄O₆ and the combinations of P₄O₆ and H₂O; H₃PO₃ and PCl₃; H₃PO₃ and P₂O₅; R^{a}R^{b}P(O)H with R^{a}/R^{b} = OR" and P₂O₅; and P₄O₆ and H₃PO₃. The most preferred is P₄O₆ itself. For reasons of convenience and operational expertise, the P-O component is preferably represented by P₄O₆ of high purity containing very low levels of impurities, in particular elemental phosphorus, P₄, at a level below 1000 ppm, usually below 500 ppm and preferably not more than 200 ppm, expressed in relation to the P₄O₆ being 100%.

The number of α-oxy carboxylic acid functions, that can be converted to the corresponding compound containing an α-oxy phosphorus group by reaction with the P-O component depends on the number of phosphorus atoms with a +3 oxidation state and of the number of P-O-P linkages in the P-O component. If the number of phosphorus atoms in a +3 oxidation state is equal to or smaller than the number of P-O-P linkages in the P-O component, then the number of α-oxy carboxylic acid functions which can be reacted is equal to the number of phosphorus atoms in a +3 oxidation state. In the other cases the number of α-oxy carboxylic acid functions, which can be converted to the corresponding phosphorus containing function, is calculated from the total number of P(III)-O-P(III,V) moieties in the P-O component.

In preferred aspects of the invention herein, the P-O component is added to a solution of the compound containing an α-oxy carboxylic acid group. The compound containing an α-oxy carboxylic acid group can also be added to the P-O component, i.e. a reverse addition, which is another preferred aspect of this invention. Whatever the order of addition is, an adjuvant and/or solvent can be added in combination with the P-O component or with the compound containing an α-oxy carboxylic acid group or both. The adjuvant/solvent can be added to the reaction mixture after addition of all the reagents or to the individual reaction partners before initiating the addition of the individual partners and any combination thereof.

The adjuvant is selected from the group of:
- Broensted acids;
- Lewis acids; and
- combinations thereof.

While the adjuvants were found to beneficially mitigate/enhance the claimed method, in particular the one step formation of selected high purity compounds containing an α-oxy phosphorus group, the mechanism by virtue of which the adjuvants interfere is not well understood. In any event the essential parameters are required to generate the, by any standard, unusually beneficial results. Irrespective of the foregoing it was found that superior results can also be secured from using a mixture of the compound containing an α-oxy carboxylic acid group and the P-O component without the use of any adjuvant or solvent.

One adjuvant class are homogeneous or heterogeneous Broensted acids which can e.g. be sulfonic, carboxylic or inorganic acids. The sulfonic acid compound is selected from homogeneous and heterogeneous sulfonic and polysulfonic acids. Suitable homogeneous sulfonic acids have the formula:

(R*-(SO₃H)ₓ)

wherein R* can be selected from C₁₋₂₄ hydrocarbon groups of linear, branched, cyclic or polycyclic configuration, possibly substituted by F and/or CF₃ groups, where x is 1 to 4, or C₆₋₁₄ aromatic or alkyl aromatic groups wherein the alkyl group can be C₆₋₂₀ where x is 1 to 3 for monoaromatic systems and 1 to 4 for diaromatic and higher aromatic systems. R* can also be represented by diphenylether or diphenylmethane or by C₆₋₂₀ alkyl diphenylmethane or C₆₋₂₀ alkyl diphenylether with x equal to 1 to 2.

Preferred heterogeneous sulfonic acids can be represented by species of discretionary selected subclasses as follows:
(1) sulfonic acids grafted onto resins comprising copolymers of styrene, ethylvinyl benzene and divinyl benzene functionalized so as to graft SO₃H groups onto the aromatic groups can be used. These acidic resins can be used in different physical configurations such as in gel form, in a macro-reticulated configuration or supported onto a carrier material such as silica or carbon or carbon nanotubes. A known example of such resins is AMBERLYST 15 from Rohm and Haas. Other types of resins include perfluorinated resins carrying sulfonic acid groups. The fluorinated resins can be used as such or supported onto an inert material like silica or carbon or carbon nanotubes entrapped in a highly dispersed network of metal oxides and/or silica. NAFION is an example of such fluorinated resins. NAFION is a Trade Mark of the Du Pont Company. AMBERLYST 15 is a Trade Mark of the Rohm and Haas Company.
(2) sulfonic acids deposited on solids, having a lone pair of electrons, like silica, silica-alumina combinations, alumina, zeolites, silica, activated charcoal, sand and/or silica gel can be used as support for sulfonic acids, like methane sulfonic acid or paratoluene sulfonic acid. Solids, like zeolites, silica, or mesoporous silica e.g. MCM-41 or-48, or polymers like e.g. polysiloxanes can be functionalized by chemical grafting to thus yield sulfonic acid groups or precursors therefore. The functionalization can be introduced in various ways by direct grafting on the solid by e.g. reaction of the SiOH groups of the silica with chlorosulfonic acid; or can be attached to the solid by means of organic spacers which can be e.g. a perfluoro alkyl silane derivative. Sulfonic acid functionalized silica can also be prepared via a sol gel process, leading to e.g. a thiol functionalized silica, by co-condensation of Si(OR)₄ and e.g. 3-mercaptopropyl-tri-methoxy silane using either neutral or ionic templating methods with subsequent oxidation of the thiol to the corresponding sulfonic acid by e.g. H₂O₂. The functionalized solids can be used as is, i.e. in powder form, in the form of a zeolitic membrane, or in many other ways like in admixture with other polymers in membranes or in the form of solid extrudates or in a coating of e.g. a structural inorganic support e.g. monoliths of cordierite.

Homogeneous sulfonic acids are adapted to form a single liquid phase within the reaction medium under the reaction conditions. It is understood that the sulfonic acids which are insoluble in the reaction medium, and thus non-homogeneous, at ambient conditions e.g. 20 °C, can become soluble at e.g. the reaction temperature and thus qualify as "homogeneous". The sulfonic acid may be recovered from the reaction medium by known techniques such as e.g. filtration of insoluble acids, or by other techniques routinely available such as ion exchange, nanofiltration or electrodialysis. The homogeneous nature of a sulfonic acid can be ascertained routinely by e.g. visible inspection of precipitation or phase separation properties.

The term heterogeneous means, that the sulfonic acid is substantially insoluble in the reaction medium at the reaction conditions. The insoluble nature of the acid can be ascertained routinely e.g. based on visible observation.

The sulfonic acid is not, and cannot be equated to, a reactant in the context of the claimed technology. Actually, the sulfonic acid is, in fine, not chemically altered as a result of the claimed method although it may well be, probably is, that the sulfonic acid interferes in the formation of reaction intermediates.

Suitable homogeneous sulfonic acids can be solid at ambient temperature and shall preferably be used in combination with organic solvents which are inert in relation to the essential reaction partners. Suitable solvents are listed in the passage below.

Preferred homogeneous and heterogeneous sulfonic acids are:
methanesulfonic acid;
trifluoromethanesulfonic acid;
Resin carrying sulfonic acid groups e.g. Amberlyst 15;
Nafion NR50; and
Nafion SAC-13.

The carboxylic acid compound is selected from homogeneous and heterogeneous carboxylic and polycarboxylic acids. Suitable homogeneous carboxylic acids have the formula:

(R**-(CO₂H)ₓ)

wherein R** can be selected from C₁₋₂₄ hydrocarbon groups of linear, branched, cyclic or polycyclic configuration, possibly substituted by F, Cl, Br, I and/or CF₃ groups; R** can be selected from perfluoro polyalkoxy hydrocarbon chain where x is 1 to 4, or C₆₋₁₄ aromatic or alkyl aromatic groups wherein the alkyl group can be C₆₋₂₀ where x is 1 to 3 for monoaromatic systems and 1 to 4 for diaromatic and higher systems. R can also be represented by diphenylether or diphenylmethane or by C₆₋₂₀ alkyl diphenylmethane or C₆₋₂₀ alkyl diphenylether with x is 1 to 2.

Suitable homogeneous carboxylic acids can be solid at ambient temperature and shall, in preferred executions be used in combination with organic solvents which are inert in relation to the essential reaction partners. Suitable solvents are listed in the passage below. Preferred carboxylic acids are trifluoroacetic acid and perfluoroundecanoic acid.

The carboxylic acid is not, and cannot be equated to, a reactant in the context of the claimed technology. Actually, the carboxylic acid is, in fine, not chemically altered as a result of the claimed method although it may well be, probably is, that the carboxylic acid interferes in the formation of reaction intermediates.

The inorganic acid compound is selected from homogeneous and heterogeneous inorganic acids. Suitable homogeneous inorganic acids are selected from:
H₃PO₃, H₃PO₄, polyphosphoric acid, metaphosphoric acid, phosphonic acid R'P(O)(OH)₂.

Heterogeneous inorganic acids can be represented by acidic metal oxide combinations which can be supported onto usual carrier materials such as silica, carbon, silica-alumina combinations or alumina. These metal oxide combinations can be used as such or with inorganic or organic acid doping. Suitable examples of this class of catalysts are amorphous silica-alumina, acid clays, such as smectites, inorganic or organic acid treated clays, pillared clays, zeolites, usually in their protic form, and metal oxides such as ZrO₂-TiO₂ in about 1 : 1 molar combination and sulphated metal oxides e.g. sulphated ZrO₂. Other suitable examples of metal oxide combinations, expressed in molar ratios, are TiO₂-SiO₂ 1 : 1 ratio; and ZrO₂-SiO₂ 1 : 1 ratio. A preferred inorganic acid is Montmorillonite K-10. Another class of suitable heterogeneous Broensted acids is represented by resin bound phosphonic acids e.g. aminomethylene-phosphonic acid attached by a variable link to macro porous polystyrene matrix e.g. QuadraPure™ AMPA from Reaxa, or inorganic bound phosphonic acids e.g. phosphonic acid attached by a variable link to an inorganic support like e.g. silica e.g. POH from PhosphonicS.

The number of equivalents of Broensted acid functions in the sulfonic, carboxylic and inorganic acids can be readily and routinely ascertained. As an example, the Broensted acidity can be determined by a simple acid base titration or by adding a known amount of a base and titration of the excess of the base, which has not been neutralized by the acid functions. For thermally stable heterogeneous sulfonic acids and heterogeneous inorganic acids the number of acid equivalents can be determined e.g. by thermal desorption of isopropylamine followed by using a micro-balance in accordance with the method of R.J. Gorte et al., J. Catal. , 129, 88, (1991) and 138, 714, (1992).

The Lewis acid is selected from homogeneous and heterogeneous Lewis acids. Suitable homogeneous Lewis acids can be selected from metal salts having the general formula:

MXₙ

wherein M represents a transition metal or main group element like Li, B, Mg, Al, Bi, Fe, Zn, or Pd; X in MXₙ is typically an anion of an acid or acid derivative like Cl, OTf or NTf₂, where Tf stands for CF₃SO₂-; and n is equal to the oxidation state of M, which can be from 1 to 5. Possible combinations are e.g. LiNTf₂; Mg(OTf)₂; MgCl₂; ZnCl₂; PdCl₂; Fe(OTf)₃; Al(OTf)₃; AlCl₃; Bi(OTf)₃; BiCl₃. Preferably, combinations of a hard metal or a metal on the borderline between hard and soft according to the HSAB (hard soft acid base) concept like Li, Mg, Al, Sc, Zn, Bi, and weakly coordinating anions like OTf or NTf₂ are used. Examples of such preferred combinations are: LiNTf₂; Mg(OTf)₂; Al(OTf)₃; Bi(OTf)₃.

The metal salt is typically dissolved in a donor solvent like acetonitrile or 1,2-dimethoxyethane to solvate the cation. Discrete complexes of such solvated metal cations like [Cu(CN)₄]OTf can be employed as well. Moreover, the combination of such metal salts with a coordinating ligand or discrete complexes can be employed. Examples of such combinations are Fe(OTf)₃ and N,N,N',N'-tetramethylethylenediamine or Mg(OTf)₂ and 15-crown-5, wherein 15-crown-5 stands for 1,4,7,10,13-pentaoxacyclopentadecane. An example for a discrete metal complex is represented by (Ph₃P)₂PdCl₂.

Another class of Lewis acids is represented by compounds containing main group elements in which the main group element represents the Lewis acid site, e.g. B(C₆F₅)₃ or Me₃SiOTf.

Yet another class of preferred Lewis Acids are organometallic species like Cp*Ru(MeCN)₃PF₆, wherein Cp* stands for pentamethylcyclopentadienyl.

Preferred heterogeneous Lewis acids can be represented by species of discretionary selected subclasses created by interaction/bonding of homogeneous Lewis acids e.g. metal complexes, metal salts or organometallic species with polymeric organic or inorganic backbones. An example of such subclass is a polystyrene matrix with bonded Sc(OTf)₂ groups. Such catalyst can be prepared e.g. by interaction of a polystyrene sulfonic acid resin e.g. Amberlyst 15 with Sc(OTf)₃. The number of equivalents of Lewis acid functions can be determined in this case by different ways e.g. by acid base determination of the unreacted sulfonic acid groups, by quantitative determination of the liberated triflic acid and by ICP measurement of the amount of Sc on the resin.

Solvents generally do not procure any benefits to the conversion of the compound containing an α-oxy carboxylic acid group to the corresponding compound containing an α-oxy phosphorus group as compared to the same reaction conducted in the absence of solvents and adjuvants. Nevertheless, in some cases higher yields of the compounds containing an α-oxy phosphorus group are obtained in the presence of specific solvents. Examples of such solvents are: acetonitrile or 1-ethyl-3-methyl-1,3-imidazolium bis(trifluoromethylsulfo-nyl)imide or chlorobenzene.

The Broensted and Lewis acids can, as recited above, be used together with a solvent or a mixture of solvents. Generally solvents inert to the reagents can be used. The solvent does not react (to any substantial degree) with the reagents involved in the reaction. Typical examples of suitable solvents are as follows: anisole; fluorobenzene; chlorinated and fluorinated hydrocarbons such as chlorobenzene, tetrachloroethane, tetrachloroethylene, dichloroethane, dichloromethane; polar solvents like diglyme, glyme, diphenyloxide, polyalkylene glycol derivatives with capped OH groups such as OR*** where R*** is a low alkyl or acyl group, aliphatic hydrocarbons such as hexane, heptane, cyclohexane; non-cyclic ethers like dibutyl ether, diethyl ether, diisopropyl ether, dipentylether, and butylmethylether cyclic ethers like tetrahydrofuran, dioxane, and tetrahydropyran; mixed cyclic/non-cyclic ethers like cyclopentylmethylether; aromatic solvents like toluene, benzene, xylene; organic acetates like ethylacetate: organic nitriles like acetonitrile, benzonitrile; silicon fluids like polymethylphenyl siloxane or mixtures thereof; ionic liquids like 1-n-butyl-imidazolium trifluoromethanesulfonate, and 1-ethyl-3-methyl-imidazolium bis(trifluoromethylsulfonyl)imi-de. Preferred solvents are 1,4-dioxane, 1,2-dimethoxyethane, cylopentylmethylether, ethylacetate, acetonitrile, chloroben-zene, toluene, dichloromethane, 1-ethyl-3-methyl-1,3-imidazolium bis(trifluoromethylsulfonyl)imide, 1-n-butyl-1,3-imidazolium triflate, or mixtures thereof.

When using solid Broensted or Lewis acids, it is preferable to use polar solvents capable of solubilizing the reagents and at least in part the products formed. Suitable solvents shall be used in a ratio of the number of equivalents of α-oxy carboxylic acid functions in the compound containing an α-oxy carboxylic acid group to the number of moles of solvent of from 1 : 0.1 to 1 : 100, preferably 1 : 1 to 1 : 80. These solvents can also be used for preparing a solution of either the P-O component or the compound containing an α-oxy carboxylic acid group utilised in the reaction. Of course, in addition to these solvents, the liquid Broensted and Lewis acids or solid Broensted or Lewis acids, dissolved in a solvent e.g. as described above, can be used together with the other reactants in the sequence recited in the claims.

The reactions in accordance with this invention are conducted in a manner routinely known in the domain of the technology. The equivalent ratio between the adjuvants selected from Broensted or Lewis acid referred to the α-oxy carboxylic acid functions in the compound containing an α-oxy carboxylic acid group can be in the range of 0.01 : 1 to 20 : 1. The neutralized compound containing an α-oxy carboxylic acid group is usually employed with an adjuvant selected from Broensted acids. Such adjuvants to be operable require a pKa, which is lower than the corresponding value of the α-oxy carboxylic acid function. The equivalent ratio of additional adjuvants required with the neutralized α-oxy carboxylic acid function in the compound containing an α-oxy carboxylic acid group is at least 1 : 1. As illustrated in the experimental showing, the method can be conducted, in one preference, by combining the reaction partners at 25 to 90 °C. If required the reaction mixture can be heated to a temperature usually within the range between 30 and 130 °C. The duration of the reaction at the selected temperatures is from 1 minute to 60 hours. The upper temperature aims at preventing any substantial undesirable decomposition of the reactants, adjuvants, solvents or of the intermediates and products formed in these reactions. It is understood and well known, that the decomposition temperature of the partners or solvents can vary depending on physical parameters such as pressure and the qualitative and quantitative parameters of the ingredients in the reaction mixture. The reaction can be conducted at ambient pressure. The duration of the reaction can vary from virtually instantaneous, e.g. 1 minute, to a preferred period of time from e.g. 1 hour to 60 hours. This duration can include the gradual addition of the reactants. In one method setup, the P₄O₆ is added to the mixture of the compound containing an α-oxy-carboxylic acid group and the adjuvant and the so formed mixture heated to a temperature in the range between 30 and 130 °C.

The reaction product formed can be recovered in an appropriate manner. The reaction product can, for example, be isolated with the aid of known technologies from the crude reaction mixture. Adjuvants of heterogeneous nature can be removed by filtration from the crude reaction mixture. Moreover, volatile adjuvants can be removed by distillation from the crude reaction mixture, possibly with the aid of a co-solvent forming an azeotrope with the adjuvant. The utilised co-solvent can be present from the beginning or later on added to the reaction mixture. In another approach, the product can be recovered from the reaction mixture by extraction with a solvent insoluble in the adjuvant used, e.g. from a water insoluble adjuvant by extraction with water or e.g. from an aqueous mixture by the aid of a water immiscible organic solvent. Separation can be achieved by crystallisation or precipitation by addition of a suitable co-solvent/diluent. The precipitated material can be separated e.g. by filtration or centrifugation and further crystallized to meet desired purities. In another approach, the final product can be recovered as a fully or partially neutralised salt. Suitable salts preferentially include alkaline and earth alkaline metals cations. The final salt products can be routinely isolated and purified e.g. by re-crystallisation to thus yield the purified salt, possibly as a hydrate or solvate. Alternatively, the salts and their hydrates can be prepared from the isolated compounds containing an α-oxy phosphorus group. The reaction product can be isolated and purified by distillation ensuring no substantial decomposition during this process. The isolation and purification of the reaction products formed require the use of routine measures well known to the notional artisan, such as treatment with activated carbon to remove potential residual traces of sulphur containing compounds.

During the conversion of the compound containing an α-oxy carboxylic acid group into the corresponding compound containing an α-oxy phosphorus group, one equivalent of CO will be formed for each equivalent of α-oxy carboxylic acid functions converted to the corresponding α-oxy phosphorus group equivalent. CO will leave the reaction mixture as a gas of very high purity. This CO can be used in many applications like e.g. as a fuel; in combination with hydrogen for methanol and Fischer-Tropsch hydrocarbons manufacture; for hydroformylation reactions; for alcohol carbonylation, e.g. carbonylation of methanol to acetic acid; or the conversion of methylacetate to acetic anhydride.

The method in accordance with the invention herein is illustrated by a series of actual examples as follows;

### Example 1

In a three-necked round-bottom flask equipped with a mechanical stirrer, a thermometer, a condenser and a dropping funnel 22.25 g (247 mmol) methoxyacetic acid was mixed with 118.41 g (1232 mmol) methanesulfonic acid. 13.55 g (62 mmol) P₄O₆ was added drop-wise. After completed addition the reaction mixture was stirred for 1.5 h at 30 °C. During the addition and the reaction time the evolution of CO was observed. Then 30 ml H₂O was added and the obtained liquid was analysed by ³¹P-NMR spectroscopy. Methoxymethylphosphonic acid was detected at 99.0 %w/w.

### Example 2

In a three-necked round-bottom flask equipped with a mechanical stirrer, a thermometer, a condenser and a dropping funnel 5.66 g (20 mmol) P₄O₁₀ and 3.28 g (40 mmol) phosphorous acid were mixed with 20 ml methanesulfonic acid. The mixture was stirred for 1 h at 50 °C. 3.60 g (40 mmol) methoxyacetic acid was added slowly. After completed addition the reaction mixture was stirred for additional 1 h at 50 °C. During the addition and the reaction time the evolution of CO was observed. Then 5 ml H₂O was added and the obtained liquid was analysed by ³¹P-NMR spectroscopy. Methoxymethylphosphonic acid was detected at 97.1 %w/w.

### Example 3

In a three-necked round-bottom flask equipped with a mechanical stirrer, a thermometer, a condenser and a dropping funnel 31.36 g (176 mmol) 3,6,9-trioxadecanoic acid was mixed with 50 ml methanesulfonic acid. 9.68 g (44 mmol) P₄O₆ was added drop-wise at below 30 °C. After completed addition the reaction mixture was stirred for 2 h at 30 °C. During the addition and the reaction time the evolution of CO was observed. Then 25 ml H₂O was added and the obtained liquid was analysed by ¹H- and ³¹P-NMR spectroscopy. 2,5,8-Trioxanonyl-1-phosphonic acid was detected at 97.0 %w/w

### Example 4

In a three-necked round-bottom flask equipped with a mechanical stirrer, a thermometer, a condenser and a dropping funnel 18.92 g (210 mmol) methoxyacetic acid and 7.86 g (53 mmol) trifluoromethanesulfonic acid were mixed with 50 ml 1,4-dioxane. 11.55 g (53 mmol) P₄O₆ was added drop-wise over 2 h. During the addition and the reaction time the evolution of CO was observed. After completed addition the reaction mixture kept standing at room temperature for 60 h, before 5 ml H₂O was added. The obtained liquid was analysed by ³¹P-NMR spectroscopy. Methoxymethylphosphonic acid was detected at 88.3 %w/w.

### Example 5

In a three-necked round-bottom flask equipped with a mechanical stirrer, a thermometer, a condenser and a dropping funnel 18.92 g (210 mmol) methoxyacetic acid was mixed with 23.94 g (210 mmol) trifluoroacetic acid. 11.55 g (53 mmol) P₄O₆ was added drop-wise at 30 °C. After completed addition the reaction mixture was stirred for 3 h at 60 °C. Then 2 ml H₂O was added and the obtained liquid analysed by ³¹P-NMR spectroscopy. Methoxymethylphosphonic acid was detected at 89.1 %w/w.

### Example 6

In a three-necked round-bottom flask equipped with a mechanical stirrer, a thermometer, a condenser and a dropping funnel 6.34 g (70 mmol) methoxyacetic acid and 5.66 g (18 mmol) magnesium bistrifluoromethanesulfonate were mixed with 20 ml acetonitrile. 3.87 g (18 mmol) P₄O₆ was added drop-wise at 35 °C. After completed addition the reaction mixture was stirred for 4 h at 55 °C. During the addition and the reaction time the evolution of CO was observed. After keeping the mixture standing at room temperature overnight, 5 ml H₂O was added. The obtained liquid was analysed by ³¹P-NMR spectroscopy. Methoxymethylphosphonic acid was detected at 92.1 %w/w.

### Example 7

In a three-necked round-bottom flask equipped with a mechanical stirrer, a thermometer, a condenser and a dropping funnel 9.01 g (100 mmol) methoxyacetic acid was placed. 5.50 g (25 mmol) P₄O₆ was added drop-wise at 30 °C. After completed addition the reaction mixture was stirred for 4 h. During the addition and the reaction time the evolution of CO was observed. The reaction mixture was kept standing at room temperature overnight, before 5 ml H₂O was added. The obtained liquid was analysed by ³¹P-NMR spectroscopy. Methoxymethylphosphonic acid was detected at 35.4 %w/w.

### Example 8

In a three-necked round-bottom flask equipped with a mechanical stirrer, a thermometer, a condenser and a dropping funnel 4.50 g (50 mmol) methoxyacetic acid was mixed with 50 ml chlorobenzene. 2.75 g (12.5 mmol) P₄O₆ was added slowly. After completed addition the reaction mixture was stirred for additional 4 h at 80 °C. During the addition and the reaction time the evolution of CO was observed. Then 20 ml H₂O was added. After phase separation the aqueous phase was analysed by ³¹P-NMR spectroscopy. Methoxymethylphosphonic acid was detected at 52.7 %w/w.

### Example 9

In a three-necked round-bottom flask equipped with a mechanical stirrer, a thermometer, a condenser and a dropping funnel 9.01 g (100 mmol) methoxyacetic acid was mixed with 50 ml acetonitrile. 5.50 g (25 mmol) P₄O₆ was added drop-wise at 50 °C. After completed addition the reaction mixture was stirred for 4 h at 60 °C. During the addition and the reaction time the evolution of CO was observed. Afterwards the mixture was kept standing at room temperature overnight. 25 ml H₂O was added and the obtained liquid analysed by ³¹P-NMR spectroscopy. Methoxymethylphosphonic acid was detected at 36.0 %w/w.

### Example 10

In a three-necked round-bottom flask equipped with a mechanical stirrer, a thermometer, a condenser and a dropping funnel 4.50 g (50 mmol) methoxyacetic acid was mixed with 50 ml acetonitrile. 2.75 g (12.5 mmol) P₄O₆ was added slowly. After completed addition the reaction mixture was stirred for additional 4 h at 80 °C. During the addition and the reaction time the evolution of CO was observed. Then 20 ml H₂O was added and the obtained liquid was analysed by ³¹P-NMR spectroscopy. Methoxymethylphosphonic acid was detected at 35.9 %w/w.

### Example 11

In a three-necked round-bottom flask equipped with a mechanical stirrer, a thermometer, a condenser and a dropping funnel 1.80 g (20 mmol) methoxyacetic acid was mixed with 15 ml 1-ethyl-3-methyl-imidazolium bis(trifluoromethylsulfo-nyl)imide. 1.10 g (5 mmol) P₄O₆ was added drop-wise at 30 °C. After completed addition the reaction mixture was stirred for 5 h at 50 °C. During the addition and the reaction time the evolution of CO was observed. 15 ml H₂O was added. After phase separation the aqueous phase was analysed by ³¹P-NMR spectroscopy. Methoxymethylphosphonic acid was detected at 75.2 %w/w.

### Example 12

In a three-necked round-bottom flask equipped with a mechanical stirrer, a thermometer, a condenser and a dropping funnel 9.01 g (100 mmol) methoxyacetic acid was mixed with 50 ml dichloromethane. 5.50 g (25 mmol) P₄O₆ was added drop-wise at 30 °C. After completed addition the reaction mixture was stirred for 4 h at 40 °C. During the addition and the reaction time the evolution of CO was observed. 30 ml H₂O was added. After phase separation the aqueous phase was analysed by ³¹P-NMR spectroscopy. Methoxymethylphosphonic acid was detected at 6.3 %w/w.

### Example 13

In a three-necked round-bottom flask equipped with a mechanical stirrer, a thermometer, a condenser and a dropping funnel 9.01 g (100 mmol) methoxyacetic acid was mixed with 50 ml 1,4-dioxane. 5.50 g (25 mmol) P₄O₆ was added drop-wise at 50 °C. After completed addition the reaction mixture was stirred for 6 h at 50 °C. During the addition and the reaction time the evolution of CO was observed. 10 ml H₂O was added and the obtained liquid analysed by ³¹P-NMR spectroscopy. Methoxymethylphosphonic acid was detected at 16.2 %w/w.

### Example 14

In a three-necked round-bottom flask equipped with a mechanical stirrer, a thermometer, a condenser and a dropping funnel 4.50 g (50 mmol) methoxyacetic acid was mixed with 50 ml chlorobenzene. 2.75 g (12.5 mmol) P₄O₆ was added drop-wise at 50 °C. After completed addition the reaction mixture was stirred for 4 h at 50 °C. During the addition and the reaction time the evolution of CO was observed. Then 15 ml H₂O was added. After phase separation the aqueous phase was analysed by ³¹P-NMR spectroscopy. Methoxymethylphosphonic acid was detected at 18.3 %w/w.

### Example 15

In a three-necked round-bottom flask equipped with a mechanical stirrer, a thermometer, a condenser and a dropping funnel 4.50 g (50 mmol) methoxyacetic acid was mixed with 50 ml ethylacetate. 2.75 g (12.5 mmol) P₄O₆ was added drop-wise at 50 °C. After completed addition the reaction mixture was stirred for 4 h at 50 °C. During the addition and the reaction time the evolution of CO was observed. Then 15 ml H₂O was added. After phase separation the aqueous phase was analysed by ³¹P-NMR spectroscopy. Methoxymethylphosphonic acid was detected at 11.3 %w/w.

### Example 16

In a three-necked round-bottom flask equipped with a mechanical stirrer, a thermometer, a condenser and a dropping funnel 9.01 g (100 mmol) methoxyacetic acid and 5.48 g (20 mmol) n-butylimidazolium triflate were mixed. Slowly, 5.50 g (25 mmol) P₄O₆ was added drop-wise. After completed addition the reaction mixture was stirred for 4 h. During the addition and the reaction time the evolution of CO was observed. The reaction mixture was kept standing at room temperature overnight, before 10 ml H₂O was added. The obtained liquid was analysed by ³¹P-NMR spectroscopy. Methoxymethylphosphonic acid was detected at 22.3 %w/w.

### Example 17

In a three-necked round-bottom flask equipped with a mechanical stirrer, a thermometer, a condenser and a dropping funnel 18.92 g (210 mmol) methoxyacetic acid was mixed with 5.05 g (53 mmol) methanesulfonic acid. 11.55 g (53 mmol) P₄O₆ was added drop-wise over 1 h at 35 °C. After completed addition the reaction mixture was stirred for 7 h. During the addition and the reaction time the evolution of CO was observed. The reaction mixture was kept standing at room temperature overnight, before 5 ml H₂O was added. The obtained liquid was analysed by ³¹P-NMR spectroscopy. Methoxymethylphosphonic acid was detected at 72.3 %w/w.

### Example 18

In a three-necked round-bottom flask equipped with a mechanical stirrer, a thermometer, a condenser and a dropping funnel 18.92 g (210 mmol) methoxyacetic acid was mixed with 0.40 g (2.6 mmol) trifluoromethanesulfonic acid. 11.55 g (53 mmol) P₄O₆ was added drop-wise over 1 h at 45 °C. After completed addition the reaction mixture was stirred for 3 h at 45 °C. During the addition and the reaction time the evolution of CO was observed. The reaction mixture was kept standing at room temperature overnight, before 5 ml H₂O was added. The obtained liquid was analysed by ³¹P-NMR spectroscopy. Methoxymethylphosphonic acid was detected at 43.1 %w/w.

### Example 19

In a three-necked round-bottom flask equipped with a mechanical stirrer, a thermometer, a condenser and a dropping funnel 18.92 g (210 mmol) methoxyacetic acid and 20.18 g (210 mmol) methanesulfonic acid were mixed with 50 ml acetonitrile. 11.55 g (53 mmol) P₄O₆ was added drop-wise over 2 h at 35 °C. After completed addition the reaction mixture was stirred for 12 h at 35 °C. During the addition and the reaction time the evolution of CO was observed. Then 4 ml H₂O was added and the obtained liquid was analysed by ³¹P-NMR spectroscopy. Methoxymethylphosphonic acid was detected at 32.2 %w/w.

### Example 20

In a three-necked round-bottom flask equipped with a mechanical stirrer, a thermometer, a condenser and a dropping funnel 18.92 g (210 mmol) methoxyacetic acid and 5.00 g (53 mmol) magnesium chloride were mixed with 75 ml acetonitrile and 30 ml 1,2-dimethoxyethane. 11.55 g (53 mmol) P₄O₆ was added drop-wise at 60 °C. After completed addition the reaction mixture was stirred for 1 h at 60 °C. During the addition and the reaction time the evolution of CO was observed. Then 20 ml H₂O was added and the obtained liquid was analysed by ³¹P-NMR spectroscopy. Methoxymethylphosphonic acid was detected at 25.5 %w/w.

### Example 21

In a three-necked round-bottom flask equipped with a mechanical stirrer, a thermometer, a condenser and a dropping funnel 18.92 g (210 mmol) methoxyacetic acid and 7.16 g (53 mmol) zinc chloride were mixed with 100 ml acetonitrile. 11.55 g (53 mmol) P₄O₆ was added drop-wise at 40 °C. The reaction mixture was stirred for 2.5 h at 80 °C. During the addition and the reaction time the evolution of CO was observed. Then 15 ml H₂O was added. The obtained liquid was analysed by ³¹P-NMR spectroscopy. Methoxymethylphosphonic acid was detected at 22.4 %w/w.

### Example 22

In a three-necked round-bottom flask equipped with a mechanical stirrer, a thermometer, a condenser and a dropping funnel 4.50 g (50 mmol) methoxyacetic acid and 2.79 g (12.5 mmol) trimethylsilyl trifluoromethanesulfonate were mixed. 2.75 g (12.5 mmol) P₄O₆ was added drop-wise over a period of 2 h. After completed addition the reaction mixture was stirred for additional 2 h. During the addition and the reaction time the evolution of CO was observed. Then 5 ml H₂O was added and the obtained liquid was analysed by ³¹P-NMR spectroscopy. Methoxymethylphosphonic acid was detected at 81.4 %w/w.

### Example 23

In a three-necked round-bottom flask equipped with a mechanical stirrer, a thermometer, a condenser and a dropping funnel 9.01 g (100 mmol) methoxyacetic acid and 0.72 g (2.5 mmol) lithium bis(trifluoromethylsulfonyl)imide were mixed with 20 ml acetonitrile. 5.50 g (25 mmol) P₄O₆ was added drop-wise. After completed addition the reaction mixture was stirred for 3 h at 50 °C. During the addition and the reaction time the evolution of CO was observed. Afterwards 5 ml H₂O was added and the obtained liquid analysed by ³¹P-NMR spectroscopy. Methoxymethylphosphonic acid was detected at 61.9 %w/w.

### Example 24

In a three-necked round-bottom flask equipped with a mechanical stirrer, a thermometer, a condenser and a dropping funnel 9.01 g (100 mmol) methoxyacetic acid and 0.33 g (2.5 mmol) aluminium chloride were mixed with 100 ml acetonitrile. 5.50 g (25 mmol) P₄O₆ was added drop-wise at 50 °C. After completed addition the reaction mixture was stirred for 4 h at 70 °C. During the addition and the reaction time the evolution of CO was observed. Afterwards 30 ml H₂O was added and the obtained liquid analysed by ³¹P-NMR spectroscopy. Methoxymethylphosphonic acid was detected at 37.9 %w/w.

### Example 25

In a three-necked round-bottom flask equipped with a mechanical stirrer, a thermometer, a condenser and a dropping funnel 9.01 g (100 mmol) methoxyacetic acid and 1.19 g (2.5 mmol) aluminium trifluoromethanesulfonate were mixed with 50 ml acetonitrile. 5.50 g (25 mmol) P₄O₆ was added drop-wise at 50 °C. After completed addition the reaction mixture was stirred for 4 h at 50 °C and 2 h at 80 °C. During the addition and the reaction time the evolution of CO was observed. 25 ml H₂O was added and the obtained liquid analysed by ³¹P-NMR spectroscopy. Methoxymethylphosphonic acid was detected at 59.0 %w/w.

### Example 26

In a three-necked round-bottom flask equipped with a mechanical stirrer, a thermometer, a condenser and a dropping funnel 9.01 g (100 mmol) methoxyacetic acid and 1.64 g (2.5 mmol) bismuth trifluoromethanesulfonate were mixed with 50 ml acetonitrile. 5.50 g (25 mmol) P₄O₆ was added drop-wise at 50 °C. After completed addition the reaction mixture was stirred for 3 h at 50 °C and 2 h at 80 °C. During the addition and the reaction time the evolution of CO was observed. 25 ml H₂O was added and the obtained liquid analysed by ³¹P-NMR spectroscopy. Methoxymethylphosphonic acid was detected at 62.4 %w/w.

### Example 27

In a three-necked round-bottom flask equipped with a mechanical stirrer, a thermometer, a condenser and a dropping funnel 9.01 g (100 mmol) methoxyacetic acid and 0.79 g (2.5 mmol) bismuth chloride were mixed with 75 ml acetonitrile. 5.50 g (25 mmol) P₄O₆ was added drop-wise at 50 °C. After completed addition the reaction mixture was stirred for 2 h at 50 °C and 1 h at 80 °C. During the addition and the reaction time the evolution of CO was observed. 25 ml H₂O was added and the obtained liquid analysed by ³¹P-NMR spectroscopy. Methoxymethylphosphonic acid was detected at 21.3 %w/w.

### Example 28

In a three-necked round-bottom flask equipped with a mechanical stirrer, a thermometer, a condenser and a dropping funnel 9.01 g (100 mmol) methoxyacetic acid and 0.35 g (2 mmol) palladium(II) chloride were mixed with 50 ml acetonitrile. 5.50 g (25 mmol) P₄O₆ was added drop-wise at 50 °C. After completed addition the reaction mixture was stirred for 4 h to 60 °C. During the addition and the reaction time the evolution of CO was observed. Afterwards the mixture was kept standing at room temperature overnight. 25 ml H₂O was added and the obtained liquid analysed by ³¹P-NMR spectroscopy. Methoxymethylphosphonic acid was detected at 41.3 %w/w.

### Example 29

In a three-necked round-bottom flask equipped with a mechanical stirrer, a thermometer, a condenser and a dropping funnel 9.01 g (100 mmol) methoxyacetic acid and 1.28 g (2.5 mmol) tris(pentafluorophenyl)borane were mixed with 50 ml acetonitrile. 5.50 g (25 mmol) P₄O₆ was added drop-wise at 50 °C. After completed addition the reaction mixture was stirred for 5 h at 50 °C. During the addition and the reaction time the evolution of CO was observed. 10 ml H₂O was added and the obtained liquid was analysed by ³¹P-NMR spectroscopy. Methoxymethylphosphonic acid was detected at 20.0 %w/w.

### Example 30

In a three-necked round-bottom flask equipped with a mechanical stirrer, a thermometer, a condenser and a dropping funnel 22.18 g (246 mmol) methoxyacetic acid and 13.00 g (12 mmol) Amberlyst-15 (dry, hydrogen form) were mixed with 70 ml chlorobenzene. 13.55 g (62 mmol) P₄O₆ was added drop-wise over 2 h at below 30 °C. During the addition and the reaction time the evolution of CO was observed. Afterwards the mixture was kept standing at room temperature overnight. 30 ml H₂O was added, the Amberlyst-15 was filtered off and the two phases were separated. The aqueous phase was analysed by ³¹P-NMR spectroscopy. Methoxymethylphosphonic acid was detected at 77.7 %w/w.

### Example 31

In a three-necked round-bottom flask equipped with a mechanical stirrer, a thermometer, a condenser and a dropping funnel 15.84 g (176 mmol) methoxyacetic acid and 8.00 g (38 mmol) Amberlyst-15 (dry, hydrogen form) were mixed with 50 ml 1,4-dioxane. 9.68 g (44 mmol) P₄O₆ was added drop-wise at below 30 °C. After completed addition the reaction mixture was stirred for 3 h at 35 °C. During the addition and the reaction time the evolution of CO was observed. 25 ml H₂O was added and the Amberlyst-15 was filtered off. The obtained liquid was analysed by ³¹P-NMR spectroscopy. Methoxymethylphosphonic acid was detected at 38.8 %w/w.

### Example 32

In a three-necked round-bottom flask equipped with a mechanical stirrer, a thermometer, a condenser and a dropping funnel 15.84 g (176 mmol) methoxyacetic acid and 8.00 g (38 mmol) Amberlyst-15 (dry, hydrogen form) were mixed with 50 ml 1,2-dimethoxyethane. 9.68 g (44 mmol) P₄O₆ was added drop-wise. After completed addition the reaction mixture was stirred for 3 h at 40 °C. During the addition and the reaction time the evolution of CO was observed. 25 ml H₂O was added and the Amberlyst-15 was filtered off. After phase separation the aqueous phase was analysed by ³¹P-NMR spectroscopy. Methoxymethylphosphonic acid was detected at 35.7 %w/w.

### Example 33

In a three-necked round-bottom flask equipped with a mechanical stirrer, a thermometer, a condenser and a dropping funnel 18.91 g (210 mmol) methoxyacetic acid and 11.17 g (53 mmol) Amberlyst-15 (dry, hydrogen form) were mixed with 50 ml acetonitrile. 11.55 g (53 mmol) P₄O₆ was added drop-wise over 1.5 h at 35 °C. After completed addition the reaction mixture was stirred for 3 h at 35 °C. During the addition and the reaction time the evolution of CO was observed. After keeping the mixture standing at room temperature for 36 h, 5 ml H₂O was added. The Amberlyst-15 was filtered off and the obtained liquid was analysed by ³¹P-NMR spectroscopy. Methoxymethylphosphonic acid was detected at 45.4 %w/w.

### Example 34

In a three-necked round-bottom flask equipped with a mechanical stirrer, a thermometer, a condenser and a dropping funnel 18.91 g (210 mmol) methoxyacetic acid and 11.17 g (53 mmol) Amberlyst-15 (dry, hydrogen form) were mixed with 100 ml ethylacetate. 11.55 g (53 mmol) P₄O₆ was added drop-wise at 45 °C. After completed addition the reaction mixture was stirred for 6 h at 45 °C. During the addition and the reaction time the evolution of CO was observed. 50 ml H₂O was added and the Amberlyst-15 was filtered off. After phase separation the obtained aqueous layer was analysed by ³¹P-NMR spectroscopy. Methoxymethylphosphonic acid was detected at 82.6 %w/w.

### Example 35

In a three-necked round-bottom flask equipped with a mechanical stirrer, a thermometer, a condenser and a dropping funnel 18.91 g (210 mmol) methoxyacetic acid and 6.94 g (0.13 mmol) Nafion SAC-13 were mixed with 100 ml ethylacetate. 11.55 g (53 mmol) P₄O₆ was added drop-wise at 50 °C. After completed addition the reaction mixture was stirred for 2 h. During the addition and the reaction time the evolution of CO was observed. 50 ml H₂O was added and the Nafion SAC-13 was filtered off. After phase separation the aqueous phase was analysed by ³¹P-NMR spectroscopy. Methoxymethylphosphonic acid was detected at 28.4 %w/w.

### Example 36

In a three-necked round-bottom flask equipped with a mechanical stirrer, a thermometer, a condenser and a dropping funnel 18.91 g (210 mmol) methoxyacetic acid and 11.17 g (53 mmol) Amberlyst-15 (dry, hydrogen form) were mixed with 50 ml dichloromethane. 11.55 g (53 mmol) P₄O₆ was added drop-wise at 30 °C. After completed addition the reaction mixture was stirred for 6 h. During the addition and the reaction time the evolution of CO was observed. 3 ml H₂O was added and the Amberlyst-15 was filtered off and washed with 30 ml acetonitrile. After phase separation the obtained aqueous layer was analysed by ³¹P-NMR spectroscopy. Methoxymethylphosphonic acid was detected at 86.8 %w/w.

### Example 37

In a three-necked round-bottom flask equipped with a mechanical stirrer, a thermometer, a condenser and a dropping funnel 18.91 g (210 mmol) methoxyacetic acid and 11.17 g (53 mmol) Amberlyst-15 (dry, hydrogen form) were mixed with 100 ml cyclopentylmethylether. 11.55 g (53 mmol) P₄O₆ was added drop-wise at 45 °C. After completed addition the reaction mixture was stirred for 3 h at 45 °C and 2 h at 40 °C. During the addition and the reaction time the evolution of CO was observed. 20 ml H₂O was added and the Amberlyst-15 was filtered off. After phase separation the aqueous phase was analysed by ³¹P-NMR spectroscopy. Methoxymethylphosphonic acid was detected at 13.3 %w/w.

### Example 38

In a three-necked round-bottom flask equipped with a mechanical stirrer, a thermometer, a condenser and a dropping funnel 9.01 g (100 mmol) methoxyacetic acid and 5.00 g (0.7 mmol) Nafion SAC-13 were mixed with 50 ml acetonitrile. 5.50 g (25 mmol) P₄O₆ was added drop-wise at 50 °C. After completed addition the reaction mixture was stirred for 4 h at 50 °C. During the addition and the reaction time the evolution of CO was observed. 20 ml H₂O was added and the Nafion SAC-13 was filtered off. The obtained liquid was analysed by ³¹P-NMR spectroscopy. Methoxymethylphosphonic acid was detected at 30.0 %w/w.

### Example 39

In a three-necked round-bottom flask equipped with a mechanical stirrer, a thermometer, a condenser and a dropping funnel 9.01 g (100 mmol) methoxyacetic acid and 1.00 g (1.5 mmol) polymer bound Sc(OTf)₃ (Sigma-Aldrich n°: 590312) were mixed with 50 ml acetonitrile. 5.50 g (25 mmol) P₄O₆ was added drop-wise at 50 °C. After completed addition the reaction mixture was stirred for 2 h at 50 °C. During the addition and the reaction time the evolution of CO was observed. 20 ml H₂O was added and the polymer-bound Sc(OTf)₃ was filtered off. The obtained liquid was analysed by ³¹P-NMR spectroscopy. Methoxymethylphosphonic acid was detected at 13.7 %w/w.

### Example 40

In a three-necked round-bottom flask equipped with a mechanical stirrer, a thermometer, a condenser and a dropping funnel 28.14 g (210 mmol) 3,6-dioxaheptanoic acid and 8.48 g (57 mmol) trifluoromethanesulfonic acid were mixed with 45 ml acetonitrile. 11.55 g (53 mmol) P₄O₆ was added drop-wise at 35 °C. After completed addition the reaction mixture was stirred for 1 h at 35 °C. During the addition and the reaction time the evolution of CO was observed. Then 5 ml H₂O was added and obtained liquid analysed by ³¹P-NMR spectroscopy. 2,5-Dioxahexanyl-1-phosphonic acid was detected at 34.5 %w/w.

### Example 41

In a three-necked round-bottom flask equipped with a mechanical stirrer, a thermometer, a condenser and a dropping funnel 28.14 g (210 mmol) 3,6-dioxaheptanoic acid and 0.85 g (5.7 mmol) trifluoromethanesulfonic acid were mixed with 50 ml acetonitrile. Slowly, 11.55 g (53 mmol) P₄O₆ was added drop-wise. After completed addition the reaction mixture was stirred for 1.5 h. During the addition and the reaction time the evolution of CO was observed. 5 ml H₂O was added. The obtained liquid was analysed by ³¹P-NMR spectroscopy. 2,5-Dioxahexanyl-1-phosphonic acid was detected at 10.7 %w/w.

### Example 42

In a three-necked round-bottom flask equipped with a mechanical stirrer, a thermometer, a condenser and a dropping funnel 28.14 g (210 mmol) 3,6-dioxaheptanoic acid and 7.88 g (53 mmol) trifluoromethanesulfonic acid were mixed with 50 ml chlorobenzene. Slowly, 11.55 g (53 mmol) P₄O₆ was added drop-wise. After completed addition the reaction mixture was stirred for 1.5 h at 30 °C. During the addition and the reaction time the evolution of CO was observed. 50 ml H₂O was added. After phase separation the aqueous phase was analysed by ³¹P-NMR spectroscopy. 2,5-Dioxahexanyl-1-phosphonic acid was detected at 38.6 %w/w.

### Example 43

In a three-necked round-bottom flask equipped with a mechanical stirrer, a thermometer, a condenser and a dropping funnel 6.56 g (5.3 mmol) Nafion NR50 was mixed with 50 ml acetonitrile and warmed for 0.5 h to 70 °C. After cooling down to 40 °C 28.14 g (210 mmol) 3,6-dioxaheptanoic acid was added followed by the addition of 11.55 g (53 mmol) P₄O₆ over a period of 2 h. After completed addition the reaction mixture was stirred for 1.5 h at 40 °C. During the addition and the reaction time the evolution of CO was observed. 5 ml H₂O was added. The obtained liquid was analysed by ³¹P-NMR spectroscopy. 2,5-Dioxahexanyl-1-phosphonic acid was detected at 11.6 %w/w.

### Example 44

In a three-necked round-bottom flask equipped with a mechanical stirrer, a thermometer, a condenser and a dropping funnel 9.01 g (100 mmol) methoxyacetic acid and 6.94 g (5 mmol) Nafion SAC-13 were mixed with 100 ml chlorobenzene. Then 5.50 g (25 mmol) P₄O₆ was added drop-wise. After completed addition the reaction mixture was stirred for 5 h at 50 °C. During the addition and the reaction time the evolution of CO was observed. 30 ml H₂O was added. After phase separation the aqueous phase was analysed by ³¹P-NMR spectroscopy. Methoxymethylphosphonic acid was detected at 38.7 %w/w.

### Example 45

In a three-necked round-bottom flask equipped with a mechanical stirrer, a thermometer, a condenser and a dropping funnel 0.90 g (10 mmol) methoxyacetic acid and 0.60 g (10 mmol) acetic acid were mixed with 10 ml acetonitrile. 0.55 g (2.5 mmol) P₄O₆ was added drop-wise at 30 °C. After completed addition the reaction mixture was stirred for 4 h at 60 °C. During the addition and the reaction time the evolution of CO was observed. Then 5 ml H₂O was added and the obtained liquid was analysed by ³¹P-NMR spectroscopy. Methoxymethylphosphonic acid was detected at 12.2 %w/w.

### Example 46

In a three-necked round-bottom flask equipped with a mechanical stirrer, a thermometer, a condenser and a dropping funnel 1.80 g (20 mmol) methoxyacetic acid and 1.13 g (2 mmol) perfluoroundecanoic acid were mixed with 5 ml acetonitrile. 1.10 g (5 mmol) P₄O₆ was added drop-wise. After completed addition the reaction mixture was stirred for additional 4 h at 50 °C. During the addition and the reaction time the evolution of CO was observed. Then 5 ml H₂O was added and the obtained liquid analysed by ³¹P-NMR spectroscopy. Methoxymethylphosphonic acid was detected at 43.9 %w/w.

### Example 47

In a three-necked round-bottom flask equipped with a mechanical stirrer, a thermometer, a condenser and a dropping funnel 0.63 g (1.25 mmol) iron(III) trifluoromethanesulfonate and 0.29 g (2.5 mmol) N,N,N',N'-tetramethylethylenediamine were mixed with 20 ml acetonitrile and stirred for 15 min. Then 4.50 g (50 mmol) methoxyacetic acid followed by 2.75 g (12.5 mmol) P₄O₆ were added slowly. After completed addition the reaction mixture was stirred for 3 h at 50 °C. During the addition and the reaction time the evolution of CO was observed. Then 10 ml H₂O was added and the obtained liquid analysed by ³¹P-NMR spectroscopy. Methoxymethylphosphonic acid was detected at 59.7 %w/w.

### Example 48

In a three-necked round-bottom flask equipped with a mechanical stirrer, a thermometer, a condenser and a dropping funnel 4.50 g (50 mmol) methoxyacetic acid, 0.40 g (1.25 mmol) magnesium(II) trifluoromethanesulfonate and 0.28 g (1.25 mmol) 15-crown-5 were mixed with 20 ml acetonitrile. Then 2.75 g (12.5 mmol) P₄O₆ was added slowly. After completed addition the reaction mixture was stirred for 3 h at 50 °C. During the addition and the reaction time the evolution of CO was observed. Then 10 ml H₂O was added and the obtained liquid analysed by ³¹P-NMR spectroscopy. Methoxymethylphosphonic acid was detected at 52.3 %w/w.

### Example 49

In a three-necked round-bottom flask equipped with a mechanical stirrer, a thermometer, a condenser and a dropping funnel 9.01 g (100 mmol) methoxyacetic acid and 2.05 g (25 mmol) phosphorus acid were mixed with 50 ml acetonitrile. 5.50 g (25 mmol) P₄O₆ was added drop-wise at 50 °C. After completed addition the reaction mixture was and stirred for 2 h at 50 °C. During the addition and the reaction time the evolution of CO was observed. 20 ml H₂O was added and the obtained liquid analysed by ³¹P-NMR spectroscopy. Methoxymethylphosphonic acid was detected at 13.7 %w/w.

### Example 50

In a three-necked round-bottom flask equipped with a mechanical stirrer, a thermometer, a condenser and a dropping funnel 2.84 g (10 mmol) P₄O₁₀ and 2.46 g (30 mmol) phosphorous acid were mixed with 30 ml dioxane. After 1 h stirring 2.70 g (30 mmol) methoxyacetic acid was added drop-wise. After completed addition the reaction mixture was stirred for 5 h at 50 °C. During the addition and the reaction time the evolution of CO was observed. Then 10 ml H₂O was added and the obtained liquid analysed by ³¹P-NMR spectroscopy. Methoxymethylphosphonic acid was detected at 5.5 %w/w.

### Example 51

In a three-necked round-bottom flask equipped with a mechanical stirrer, a thermometer, a condenser and a dropping funnel 2.83 g (10 mmol) P₄O₁₀ and 6.60 g (60 mmol) dimethylphosphite were mixed with 15 ml methanesulfonic acid at 30 °C. After 1 h stirring 5.40 g (60 mmol) methoxyacetic acid was added drop-wise. After completed addition the reaction mixture was stirred for 4 h at 50 °C. During the addition and the reaction time the evolution of CO was observed. The obtained liquid was analysed by ³¹P-NMR spectroscopy. Methoxymethylphosphonic acid dimethyl ester was detected at 65.6 %w/w.

### Example 52

In a three-necked round-bottom flask equipped with a mechanical stirrer, a thermometer, a condenser and a dropping funnel 1.80 g (2 mmol) methoxyacetic acid was mixed with 10 ml methanesulfonic acid. 5.16 g (2 mmol) tetraethylpyrophosphite was added slowly. After completed addition the reaction mixture was stirred for 4 h. During the addition and the reaction time the evolution of CO was observed. The obtained liquid was analysed by ³¹P-NMR spectroscopy. Methoxymethylphosphonic acid diethyl ester was detected at 60.4 %w/w.

### Example 53

In a three-necked round-bottom flask equipped with a mechanical stirrer, a thermometer, a condenser and a dropping funnel 2.20 g (10 mmol) P₄O₆ was mixed with 20 ml methanesulfonic acid at 30 °C. Then 0.36 g (20 mmol) H₂O was added and the mixture was stirred for 1 h. 3.60 g (40 mmol) methoxyacetic acid was added drop-wise. After completed addition the reaction mixture was stirred for 6 h at 30 °C. During the addition and the reaction time the evolution of CO was observed. The obtained liquid was analysed by ³¹P-NMR spectroscopy. Methoxymethylphosphonic acid was detected at 65.3 %w/w.

### Example 54

In a three-necked round-bottom flask equipped with a mechanical stirrer, a thermometer, a condenser and a dropping funnel 5.66 g (20 mmol) P₄O₁₀ and 3.28 g (40 mmol) phosphorus acid were mixed with 20 ml 1-ethyl-3-methylimidazolium bis(trifluoromethylsulfonyl)imide. The mixture was stirred for 1 h at 30 °C. 3.60 g (40 mmol) methoxyacetic acid was added slowly. After completed addition the reaction mixture was stirred for additional 4 h at 50 °C. During the addition and the reaction time the evolution of CO was observed. Then 20 ml H₂O was added. After phase separation the aqueous phase was analysed by ³¹P-NMR spectroscopy. Methoxymethylphosphonic acid was detected at 70.7 %w/w.

### Example 55

In a three-necked round-bottom flask equipped with a mechanical stirrer, a thermometer, a condenser and a dropping funnel 0.23 g (0.83 mmol) P₄O₁₀ and 1.00 g (4.95 mmol) diphenylphosphine oxide were mixed with 1 ml methanesulfonic acid. The mixture was stirred for 30 min. Then 0.45 g (4.95 mmol) methoxyacetic acid was added slowly. After completed addition the reaction mixture was stirred for additional 6 h. During the addition and the reaction time the evolution of CO was observed. The obtained solution was analysed by ³¹P-NMR spectroscopy. Methoxymethyl-diphenyl phosphine oxide was detected at 24.7 %w/w.

### Example 56

In a three-necked round-bottom flask equipped with a mechanical stirrer, a thermometer, a condenser and a dropping funnel 18.24 g (240 mmol) glycolic acid was mixed with 70 ml methanesulfonic acid. 13.20 g (60 mmol) P₄O₆ was added drop-wise at below 50 °C. After completed addition the reaction mixture was stirred for 2 h at 130 °C and 1 h at 115 °C. During the reaction time the evolution of CO was observed. After cooling to room temperature 30 ml H₂O was added. The obtained liquid was analysed by ³¹P-NMR spectroscopy. Hydroxymethylphosphonic acid was detected at 51.8 %w/w.

### Example 57

In a three-necked round-bottom flask equipped with a mechanical stirrer, a thermometer, a condenser and a dropping funnel 14.08 g (105 mmol) diglycolic acid was mixed with 70 ml methanesulfonic acid. 11.55 g (53 mmol) P₄O₆ was added drop-wise at 80 °C. After completed addition the reaction mixture was stirred for 1 h at 80 °C. During the reaction time the evolution of CO was observed. After cooling to room temperature 15 ml H₂O was added. The obtained liquid was analysed by ³¹P-NMR spectroscopy. Hydroxymethylphosphonic acid was detected at 61.1 %w/w.

### Example 58

In a three-necked round-bottom flask equipped with a mechanical stirrer, a thermometer, a condenser and a dropping funnel 4.50 g (50 mmol) methoxyacetic acid and 2 g Montmorillonite K-10 were mixed with 50 ml acetonitrile. 2.75 g (12.5 mmol) P₄O₆ was added drop-wise. After completed addition the reaction mixture was stirred for 4 h at 60 °C. During the addition and the reaction time the evolution of CO was observed. Then 10 ml H₂O was added and the solid material filtered off. The obtained liquid was analysed by ³¹P-NMR spectroscopy. Methoxymethylphosphonic acid was detected at 48.0 %w/w.

### Example 59

In a three-necked round-bottom flask equipped with a mechanical stirrer, a thermometer, a condenser and a dropping funnel 23.16 g (176 mmol) 3,6-dioxaheptanoic acid was mixed with 50 ml methanesulfonic acid. 9.68 g (44 mmol) P₄O₆ was added drop-wise at below 30 °C. After completed addition the reaction mixture was stirred for 1.5 h at 30 °C. During the addition and the reaction time the evolution of CO was observed. Then 25 ml H₂O was added and the obtained liquid was analysed by ¹H- and ³¹P-NMR spectroscopy. 2,5-Dioxahexanyl-1-phosphonic acid was detected at 78.2 %w/w

### Example 60

In a three-necked round-bottom flask equipped with a mechanical stirrer, a thermometer, a condenser and a dropping funnel 2.24 g (20 mmol) sodium methoxyacetate was mixed with 10 ml methanesulfonic acid. 1.10 g (5 mmol) P₄O₆ was added drop-wise at 30 °C. After completed addition the reaction mixture was stirred for 3 h at 30 °C. During the addition and the reaction time the evolution of CO was observed. Then 10 ml H₂O was added and the obtained liquid was analysed by ³¹P-NMR spectroscopy. Methoxymethylphosphonic acid was detected at 79.5 %w/w.

### Example 61

In a three-necked round-bottom flask equipped with a mechanical stirrer, a thermometer, a condenser and a dropping funnel 18.92 g (210 mmol) lactic acid was mixed with 50 ml methanesulfonic acid. 11.55 g (53 mmol) P₄O₆ was added drop-wise at 90 °C. After completed addition the reaction mixture was stirred for 4 h at 95 °C. During the reaction time the evolution of CO was observed. After cooling to room temperature 5 ml H₂O was added and the resulting mixture was warmed to 100 °C for 0.5 h. The obtained liquid was analysed by ¹H- and ³¹P-NMR spectroscopy. 1-Hydroxyethylphosphonic acid was detected at 25.0 %w/w.

### Example 62

In a three-necked round-bottom flask equipped with a mechanical stirrer, a thermometer, a condenser and a dropping funnel 11.11 g (50 mmol) 3,6,9-trioxaundecane-1,11-dioic acid was mixed with 74.45 g (653.0 mol) trifluoroacetic acid. 5.50 g (25 mmol) P₄O₆ was added drop-wise at 50 °C. After completed addition the reaction mixture was stirred for 6 h at 50 °C. During the reaction time the evolution of CO was observed. At room temperature 10 ml H₂O was added and the obtained liquid was analysed by ¹H- and ³¹P-NMR spectroscopy. 1,9-Diphosphono-2,5,8-trioxanonane was detected at 75.2 %w/w

### Example 63

In a three-necked round-bottom flask equipped with a mechanical stirrer, a thermometer, a condenser and a dropping funnel 24.39 g (210 mmol) 2-tetrahydrofuroic acid was mixed with 13 ml methanesulfonic acid. 11.55 g (53 mmol) P₄O₆ was added drop-wise at 30 °C. After completed addition the reaction mixture was stirred for 1.5 h at 30 °C. During the reaction time the evolution of CO was observed. After completed reaction time 55 ml H₂O was added. The obtained liquid was analysed by ¹H- and ³¹P-NMR spectroscopy. 2-Phosphono-tetrahydrofuran was detected at 81.6 %w/w.

### Example 64

In a three-necked round-bottom flask equipped with a mechanical stirrer, a thermometer, a condenser and a dropping funnel 2.77 g (20 mmol) 5-chloro-3-oxapentanoic acid was mixed with 15 ml methanesulfonic acid. 1.10 g (5 mmol) P₄O₆ was added drop-wise at 30 °C. After completed addition the reaction mixture was stirred for 2 h at 20 °C. During the reaction time the evolution of CO was observed. Then 3 ml H₂O was added and the obtained liquid analysed by ¹H- and ³¹P-NMR spectroscopy. 4-Chloro-2-oxabutanyl-1-phosphonic acid was detected at 78.1 %w/w

### Example 65

In a three-necked round-bottom flask equipped with a mechanical stirrer, a thermometer, a condenser and a dropping funnel 1.66 g (10 mmol) methoxy-phenylacetic acid was mixed with 15 ml methanesulfonic acid. 0.55 g (2.5 mmol) P₄O₆ was added drop-wise at 30 °C. After completed addition the reaction mixture was stirred for 3 h at 35 °C. During the reaction time the evolution of CO was observed. Then 1 ml H₂O was added and the obtained liquid analysed by ¹H- and ³¹P-NMR spectroscopy. 1-Methoxy-phenylmethylphosphonic acid was detected at 73.4 %w/w

### Example 66

In a three-necked round-bottom flask equipped with a mechanical stirrer, a thermometer, a condenser and a dropping funnel 3.00 g (20 mmol) 2-methoxy-butane-1,4-dioic acid was mixed with 15 ml methanesulfonic acid. 1.10 g (5 mmol) P₄O₆ was added drop-wise at 30 °C. After completed addition the reaction mixture was stirred for 5 h at 50 °C. During the reaction time the evolution of CO was observed. Then 5 ml H₂O was added and the obtained liquid analysed by ¹H- and ³¹P-NMR spectroscopy. 3-Methoxy-3-phosphono-propionic acid was detected at 20.5 %w/w

### Example 67

In a three-necked round-bottom flask equipped with a mechanical stirrer, a thermometer, a condenser and a dropping funnel 2.64 g (20 mmol) butoxyacetic acid was mixed with 15 ml methanesulfonic acid. 1.10 g (5 mmol) P₄O₆ was added drop-wise at 30 °C. After completed addition the reaction mixture was stirred for 2 h at 50 °C. During the reaction time the evolution of CO was observed. Then 5 ml H₂O was added and the obtained liquid analysed by ¹H- and ³¹P-NMR spectroscopy. 2-Oxahexanyl-1-phosphonic acid was detected at 77.9 %w/w

### Example 68

In a three-necked round-bottom flask equipped with a mechanical stirrer, a thermometer, a condenser and a dropping funnel 2.38 g (20 mmol) 5-amino-3-oxapentanoic acid was mixed with 15 ml methanesulfonic acid. 1.10 g (5 mmol) P₄O₆ was added drop-wise at 30 °C. After completed addition the reaction mixture was stirred for 3 h at 30 °C. During the reaction time the evolution of CO was observed. Then 3 ml H₂O was added and the obtained liquid analysed by ¹H- and ³¹P-NMR spectroscopy. 4-Amino-2-oxabutanyl-1-phosphonic acid was detected at 79.8 %w/w

### Example 69

In a three-necked round-bottom flask equipped with a mechanical stirrer, a thermometer, a condenser and a dropping funnel 4.04 g (20 mmol) potassium trans-phenylglycidate was mixed with 9.12 g (80 mmol) trifluoroacetic acid. 1.10 g (5 mmol) P₄O₆ was added drop-wise at 50 °C. After completed addition the reaction mixture was stirred for 4 h at 50 °C. During the addition and reaction time the evolution of CO was observed. Then 0.18 ml (10 mmol) H₂O was added and the obtained liquid analysed by ¹H- and ³¹P-NMR spectroscopy. Trans-phenylepoxyphosphono acid was detected at 3.8 %w/w.

### Example 70

In a three-necked round-bottom flask equipped with a mechanical stirrer, a thermometer, a condenser and a dropping funnel 1.30 g (10 mmol) 2-allyloxy-propionic acid and 0.72 g (2.5 mmol) lithium bis(trifluoromethylsulfonyl)imide were mixed with 10 ml acetonitrile. 0.55 g (2.5 mmol) P₄O₆ was added drop-wise at 30 °C. After completed addition the reaction mixture was stirred for 7 h at 50 °C. During the addition and the reaction time the evolution of CO was observed. Then 10 ml H₂O was added and the obtained liquid analysed by ¹H- and ³¹P-NMR spectroscopy. 1-Allyloxy-ethanyl-phosphonic acid was detected at 31.1 %w/w.

### Example 71

In a three-necked round-bottom flask equipped with a mechanical stirrer, a thermometer, a condenser and a dropping funnel 2.49 g (10 mmol) 5-phthalimido-3-oxapentanoic acid and 0.72 g (2.5 mmol) lithium bis(trifluoromethylsulfonyl)imide were mixed with 20 ml acetonitrile. 0.55 g (2.5 mmol) P₄O₆ was added slowly. After completed addition the reaction mixture was stirred for 6 h at 50 °C. During the addition and the reaction time the evolution of CO was observed. Then 5 ml H₂O was added and the obtained liquid was analysed by ³¹P-NMR spectroscopy. 4-Phthalimido-2-oxabutanyl-1-phosphonic acid was detected at 58.4 %w/w.

### Example 72

In a three-necked round-bottom flask equipped with a mechanical stirrer, a thermometer, a condenser and a dropping funnel 3.28 g (40 mmol) phosphorous acid was mixed with 30 ml methanesulfonic acid. 4.40 g (20 mmol) P₄O₆ was added drop-wise. After completed addition the reaction mixture was stirred for 30 min, before 10.80 g (120 mmol) methoxyacetic acid was added drop-wise. The resulting mixture was stirred for 3 h at 30 °C. During the addition and the reaction time the evolution of CO was observed. Then 10 ml H₂O was added and the obtained liquid was analysed by ³¹P-NMR spectroscopy. Methoxymethylphosphonic acid was detected at 70.4 %w/w.

### Example 73

In a three-necked round-bottom flask equipped with a mechanical stirrer, a thermometer, a condenser and a dropping funnel 4.50 g (50 mmol) methoxyacetic acid and 0.25 g (0.5 mmol)pentamethylcylopentadienyl(trisacetonitrile)ruthenium(II) hexafluorophosphate were mixed with 50 ml acetonitrile. 2.75 g (12.5 mmol) P₄O₆ was added drop-wise. After completed addition the reaction mixture was stirred for 4 h at 50 °C. During the addition and the reaction time the evolution of CO was observed. Then 20 ml H₂O was added and the obtained liquid was analysed by ³¹P-NMR spectroscopy. Methoxymethylphosphonic acid was detected at 18.8 %w/w.

### Example 74

In a three-necked round-bottom flask equipped with a mechanical stirrer, a thermometer, a condenser and a dropping funnel 4.50 g (50 mmol) methoxyacetic acid and 0.44 g (0.6 mmol) bis(triphenylphosphine)palladium dichloride were mixed with 50 ml acetonitrile. 2.75 g (12.5 mmol) P₄O₆ was added drop-wise. After completed addition the reaction mixture was stirred for 4 h at 50 °C. During the addition and the reaction time the evolution of CO was observed. Then 5 ml H₂O was added and the obtained liquid was analysed by ³¹P-NMR spectroscopy. Methoxymethylphosphonic acid was detected at 17.6 %w/w.

### Example 75

In a three-necked round-bottom flask equipped with a mechanical stirrer, a thermometer, a condenser and a dropping funnel 1.64 g (20 mmol) phosphorus acid and 2.75 g (20 mmol) phosphorus trichloride were mixed with 10 ml methanesulfonic acid and stirred for 1.5 h. Then 3.60 g (40 mmol) methoxyacetic acid was added drop-wise. The resulting mixture was stirred for 4 h at 30 °C. During the addition and the reaction time the evolution of CO was observed. Than 3 ml H₂O was added and the obtained liquid analysed by ³¹P-NMR spectroscopy. Methoxymethylphosphonic acid was detected at 71.7 w/w%.

### Example 76

In a three-necked round-bottom flask equipped with a mechanical stirrer, a thermometer, a condenser and a dropping funnel 2.24 g (10 mmol) dipotassium 2-methoxy-2-methyl-malonate was mixed with 5 ml methanesulfonic acid. 1.10 g (5.0 mmol) P₄O₆ was added drop-wise After completed addition the reaction mixture was stirred for 6 h at 50 °C. During the reaction time the evolution of CO was observed. At room temperature 5 ml H₂O was added and the obtained liquid was analysed by ¹Hand ³¹P-NMR spectroscopy. 1-Methoxy-ethylidene-1,1-diphosphonic acid was detected at 17.6 %w/w.

### Example 77.

In a three-necked round-bottom flask equipped with a mechanical stirrer, a thermometer, a condenser and a dropping funnel 3.52 g (20 mmol) 3,6-dioxadecanoic acid and was mixed with 3 ml methanesulfonic acid. 1.10 g (5 mmol) P₄O₆ was added drop-wise. After completed addition the reaction mixture was stirred for 8 h at 40 °C. During the addition and the reaction time the evolution of CO was observed. Then 5 ml H₂O was added and obtained liquid analysed by ³¹P-NMR spectroscopy. 2,5-Dioxanonyl-1-phosphonic acid was detected at 10.5 %w/w.

### Example 78.

In a three-necked round-bottom flask equipped with a mechanical stirrer, a thermometer, a condenser and a dropping funnel 4.26 g (30 mmol) phenylphosphinic acid and 2.84 g (10 mmol) P₄O₁₀ were mixed with 10 ml methanesulfonic acid and stirred for 30 min at 60 °C. Slowly 2.70 g (30 mmol) methoxyacetic acid was added drop-wise. After completed addition the reaction mixture was stirred for 2 h at 60 °C. During the addition and the reaction time the evolution of CO was observed. Then 10 ml H₂O was added and obtained liquid analysed by ¹H- and ³¹P-NMR spectroscopy. Methoxymethyl-phenylphosphinic acid was detected at 6.4 %w/w.

### Example 79.

In a three-necked round-bottom flask equipped with a mechanical stirrer, a thermometer, a condenser and a dropping funnel 1.90 g (12 mmol) 2,2,2-trifluoroethoxyacetic acid was mixed with 1 ml methanesulfonic acid. Slowly 0.66 g (3 mmol) P₄O₆ was added drop-wise. After completed addition the reaction mixture was stirred for 4 h at 50 °C. During the addition and the reaction time the evolution of CO was observed. Then 1 ml H₂O was added and obtained liquid analysed by ¹H- and ³¹P-NMR spectroscopy. 4,4,4-Trifluoro-2-oxabutylphosphonic acid was detected at 48.4 %w/w.

## Claims

1. A method for the manufacture of compounds containing an α-oxy phosphorus group having the formula:
R³[-O-C(R¹)(R²)ₘ(P(O)R^{a}R^{b})₂₋ₘ]ₙ -III-
comprising the steps of reacting a compound containing an α-oxy-carboxylic acid group selected from:
glycolic acid;
diglycolic acid;
lactic acid;
methoxyacetic acid;
sodium methoxyacetate;
butoxyacetic acid;
3,6-dioxaheptanoic acid;
3,6,9-trioxadecanoic acid;
3,6-dioxadodecanoic acid;
3,6,9-trioxaundecane-1,11-dioic acid;
5-chloro-3-oxapentanoic acid;
5-amino-3-oxapentanoic acid;
5-phthalimido-3-oxapentanoic acid;
2-tetrahydrofuroic acid;
methoxy-phenyl-acetic acid;
2-methoxy-butane-1,4-dioic acid;
potassium trans-phenylglycidate;
2-allyloxy-propionic acid;
2,2,2-trifluoroethoxyacetic acid;
and a P-O component having at least one P-O-P moiety, whereby at least one phosphorus has the +3 oxidation state, whereby the second phosphorus of the P-O-P moiety in the P-O component has a +3 or +5 oxidation state, and whereby at least 20 mol% of the total P atoms in the P-O component are at the +3 oxidation state,
by adding the P-O component to the compound containing an α-oxy carboxylic acid group, or the reverse, in an equivalent ratio of α-oxy carboxylic acid functions in the compound containing an α-oxy carboxylic acid group : P(III)-O-P(III,V) moieties in the P-O component of from 1 : 6 to 2 : 1;
wherein R^{a} and R^{b} are independently selected from a C₁₋₂₀ hydrocarbon chain in branched or linear configuration; a silyl group independently substituted by C₁₋₂₀ hydrocarbon groups in branched, linear, cyclic or aromatic configuration; or OR" or N(R")₂ wherein R" can be selected from a C₁₋₂₀ hydrocarbon chain in branched or linear configuration or a silyl group independently substituted by C₁₋₂₀ hydrocarbon groups in branched, linear, cyclic or aromatic configuration; if R^{a} or R^{b} is a N(R")₂ group, then the two R" groups can be connected together with one R" group being a C₁₋₂₀ hydrocarbon chain in branched or linear configuration and the other R" being a direct bond; R^{a} and R^{b} can be connected, then R^{a} is a C₁₋₂₀ hydrocarbon chain in branched or linear configuration and R^{b} is a direct bond; if R^{a} and R^{b} are OR" groups, then R" of the first OR" group can be a C₁₋₂₀ hydrocarbon chain in branched or linear configuration and the R" of the second OR" group a direct bond; if R^{a} and R^{b} are N(R")₂ groups, then one R" group of the first N(R")₂ group can be a C₁₋₂₀ hydrocarbon chain in branched or linear configuration and one R" of the second N(R")₂ group is a direct bond to the R"-group of the first N(R")₂ group; or
R^{a} and/or R^{b} are OM'; m and n can be 1;
M' is represented by H or alkaline, earth alkaline, ammonium or protonated amine species;
R¹ is selected from: H, methyl, phenyl, or linked to R³ to form a OC₂ or OC₄ ring ;
R² is H;
R³ is selected from H, optionally substituted alkyl, or is linked to R¹.

2. The method in accordance with Claim 1 for the manufacture of a compound containing an α-oxy phosphorus group followed by adding, after completing the reaction of the P-O component with the compound containing an α-oxy carboxylic acid group, a minimum number of moles of water equal to the difference between the number of equivalents of all P-O-P linkages in the P-O component and the number of equivalents of OH groups in the α-oxy carboxylic acid function of the compound containing an α-oxy carboxylic acid group and recovering the product formed.

3. The method in accordance with Claim 1 or 2 wherein the P-O component is obtained from compounds of the following classes:
Class 1: P₄O₆, P₄Oₙ (n = 7, 8, 9), anhydrides of formula R^{a}R^{b}P-O-PR^{a}R^{b};
Class 2: H₃PO₃, H₃PO₄, polyphosphoric acid, metaphosphoric acid, mono or dialkyl phosphate esters (R'O)P(O)(OH)₂ or (R'O)₂P(O)OH, resin bound phosphonic acids, inorganic bound phosphonic acids, phosphonic acids R^{'}P(O)(OH)₂, monoalkyl phosphonic esters R'P(O)(OR')H;
Class 3: isohypophosphoric acid H(HO)P(O)-O-P(O)(OH)₂, pyrophosphorous acid H₄P₂O₅;
Class 4: POCl₃, PCl₅, P₂O₅;
Class 5: R^{a}R^{b}PCl, R^{a}PCl₂, PCl₃;
Class 6: R^{a}R^{b}P(O)H, R^{a}P(O)(OH)H; and
Class 7: H₂O;
wherein R^{a} and R^{b} are independently selected from a C₁₋₂₀ hydrocarbon chain in branched or linear configuration; a silyl group independently substituted by C₁₋₂₀ hydrocarbon groups in branched, linear, cyclic or aromatic configuration; or OR" or N(R")₂ wherein R" can be selected from a C₁₋₂₀ hydrocarbon chain in branched or linear configuration or a silyl group independently substituted by C₁₋₂₀ hydrocarbon groups in branched, linear, cyclic or aromatic configuration; if R^{a} or R^{b} is a N(R")₂ group, then the two R" groups can be connected together with one R" group being a C₁₋₂₀ hydrocarbon chain in branched or linear, cyclic configuration and the other R" being a direct bond; R^{a} and R^{b} can be connected, then R^{a} is a C₁₋₂₀ hydrocarbon chain in branched or linear configuration and R^{b} is a direct bond; if R^{a} and R^{b} are OR" groups, then R" of the first OR" group can be a C₁₋₂₀ hydrocarbon chain in branched or linear configuration and the R" of the second OR" group a direct bond; if R^{a} and R^{b} are N(R")₂ groups, then one R" group of the first N(R")₂ group can be a C₁₋₂₀ hydrocarbon chain in branched or linear configuration and one R" of the second N(R")₂ group is a direct bond to the R"-group of the first N(R")₂ group;
either as an individual species containing at least one P-O-P moiety with at least one phosphorus atom in the oxidation state +3, or by combination of two or more compounds chosen from at least two different classes, that will form the required P(III)-O-P(III,V) moiety, with at least one phosphorus atom in the oxidation state +3, whereby in cases with three or more compounds, more than one compound from the same class can be chosen, as long as one compound from another class is utilized, with combinations as follows:
Class 1 with Classes 2, 3, 4 + 7, 5 + 7, 6, 7;
Class 2 with Classes 3, 4, 4 + 7, 5, 5 + 7;
Class 3 with Classes 4, 4 + 7, 5, 5 + 7, 6;
Class 4 with Classes 5 + 7, 6, 6 + 7;
Class 5 with Classes 6, 7.

4. The method in accordance with any one of claims 1 to 3, whereby at least 40 mol% of the phosphorus atoms in the P-O component are at a +3 oxidation state.

5. The method in accordance with any one of claims 1 to 4 wherein the P-O component is obtained from combinations as follows:
- H₃PO₃ and P₂O₅;
- H₃PO₃ and PCl₃;
- R^{a}R^{b}P(O)H with R^{a} and R^{b} being phenyl, OH, OCH₂CH₃ or OCH₃ and P₂O₅;
- P₄O₆ and H₂O; and
- P₄O₆ and H₃PO₃.

6. The method in accordance with any one of claims 1 to 5 wherein the P-O component is represented by P₄O₆.

7. The method in accordance with any one of claims 1 to 6, wherein the equivalent ratio of α-oxy carboxylic acid functions in the compound containing an α-oxy carboxylic acid group : P(III)-O-P(III,V) moieties in the P-O component is of from 1 : 2 to 2 : 1.

8. The method in accordance with claims 1 and 2 wherein the process is conducted in the presence of an adjuvant selected from the group of: Lewis acids; Broensted acids; and combinations thereof.

9. The method in accordance with claim 8 wherein the Broensted acid is a homogeneous sulfonic acid having the formula
(R*-(SO₃H)ₓ)
wherein R* is selected from:
- C₁₋₂₄ hydrocarbon groups of linear, branched, cyclic or polycyclic configuration, possibly substituted by F and/or CF₃ groups, where x is 1 to 4;
- C₆₋₁₄ aromatic or alkyl aromatic groups wherein the alkyl group can be C₆₋₂₀ where x is 1 to 3 for monoaromatic systems and 1 to 4 for diaromatic and higher systems;
- diphenyl ether or diphenylmethane;
- C₆₋₂₀ alkyldiphenyl methane;
- C₆₋₂₀ alkyldiphenyl ether where x is 1 or 2.

10. The method in accordance with claim 9, wherein the sulfonic acid is heterogeneous, and is selected from:
- sulfonic acids grafted onto resins comprising copolymers of styrene, ethylvinyl benzene and divinyl benzene functionalized so as to graft SO₃H groups onto the aromatic groups;
- perfluorinated resins carrying sulfonic acid groups;
- sulfonic acids deposited onto solids having a lone pair of electrons; and
- polymers and inorganic solids functionalized by chemical grafting capable of yielding sulfonic acids.

11. The method in accordance with claim 8 wherein the adjuvant is a carboxylic acid selected from homogeneous and heterogeneous carboxylic acids.

12. The method in accordance with any one of claims 1 to 11, wherein
R^{a} and R^{b} are independently selected from a C₁₋₂₀ hydrocarbon chain in branched or linear configuration; or OR" or N(R")₂ wherein R" can be selected from a C₁₋₂₀ hydrocarbon chain in branched or linear configuration; if R^{a} or R^{b} is a N(R")₂ group, then the two R" groups can be connected together with one R" group being a C₁₋₂₀ hydrocarbon chain in branched or linear configuration and the other R" being a direct bond; R^{a} and R^{b} can be connected, then R^{a} is a C₁₋₂₀ hydrocarbon chain in branched or linear configuration and R^{b} is a direct bond; if R^{a} and R^{b} are OR" groups, then R" of the first OR" group can be a C₁₋₂₀ hydrocarbon chain in branched or linear configuration and the R" of the second OR" group a direct bond; if R^{a} and R^{b} are N(R")₂ groups, then one R" group of the first N(R")₂ group can be a C₁₋₂₀ hydrocarbon chain in branched or linear configuration and one R" of the second N(R")₂ group is a direct bond to the R"-group of the first N(R")₂ group.

13. The method in accordance with any one of claims 1 to 11, wherein
R^{a} and R^{b} are independently selected from a C₁₋₂₀ hydrocarbon chain in branched or linear configuration; or OR" or N(R")₂ wherein R" can be selected from a C₁₋₂₀ hydrocarbon chain in branched or linear configuration.

14. The method in accordance with claim 8 wherein the adjuvant is a homogeneous Lewis acid:
- having the formula: MXₙ, wherein M represents a transition metal or main group element; X an anion of an acid or acid derivative and n is equal to the oxidation state of M.
- discrete complexes of MXₙ
- complexes obtained by combination of MXₙ with a coordinating ligand
- compounds containing main group elements, in which the main group element represents the Lewis acid site
- organometallic species.

15. The method in accordance with claim 8 wherein the homogeneous Broensted acid is represented by an inorganic acid selected from: H₃PO₃, H₃PO₄, polyphosphoric acid, metaphosphoric acid, phosphonic acid R'P(O)(OH)₂.

16. The method in accordance with claim 8 wherein the heterogeneous Broensted acid is represented by an inorganic acid selected from: amorphous silica-alumina; smectites; inorganic or organic acid treated clays; pillared clays; zeolites; and metal oxides ZrO₂-TiO₂, TiO₂-SiO₂; and ZrO₂-SiO₂ in 1 : 1 molar combinations, resin bound phosphonic acids.

17. The method in accordance with any one of claims 1 to 16 wherein a solvent is present selected from: fluorinated and chlorinated hydrocarbons; aliphatic hydrocarbons; ethers; aromatic solvents; organic acetates; organic nitriles; silicon fluids; and ionic liquids.

18. The method in accordance with claim 17 wherein the solvent is selected from: anisole; fluorobenzene; chlorobenzene; tetrachloroethane; tetrachloroethylene; dichloroethane; dichloromethane; diglyme; glyme; diphenyloxide; polyalkylene glycol derivatives with capped OH groups such as OR; hexane; heptane; cyclohexane; dibutyl ether; diethyl ether; diisopropyl ether; dipentylether; butylmethylether; tetrahydrofuran; dioxane; tetrahydropyran; cyclopentylmethylether; toluene; benzene; xylene; ethylacetate; acetonitrile; benzonitrile; polymethylphenyl siloxane; 1-n-butyl-imidazolium trifluoromethanesulfonate, and 1-ethyl-3-methyl-1,3-imidazolium bis(trifluoromethyl-sulfonyl)imide.

19. The method in accordance with claim 18 wherein the solvent is selected from: acetonitrile; 1-ethyl-3-methyl-1,3-imidazolium bis(trifluoromethylsulfonyl)imide; and chlorobenzene

20. The method in accordance with any one of claims 1 to 19, wherein the reaction is carried out in the presence of a solvent and the number of equivalents of α-oxy carboxylic acid functions in the compound containing an α-oxy carboxylic acid group to the number of moles of solvent are of from 1 : 0.1 to 1 : 100.

21. The method in accordance with claim 8, wherein the heterogeneous Lewis acid is represented by discretionary subclasses created by interaction/bonding of homogeneous Lewis acid with polymeric organic or inorganic backbones.

22. The method in accordance with any one of claims 1 to 21, wherein the gaseous CO liberated by the formation of the compound containing an α-oxy phosphorus group is collected.

23. The method in accordance with any one of claims 1 to 22, wherein the level of chlorine in the P-O component is below 200 parts per million (ppm) expressed in relation to the P-O component (100%).

24. The method in accordance with claim 6 wherein the level of elemental phosphorus, P₄, in the P₄O₆ is below 200 parts per million (ppm) expressed in relation to the P₄O₆ (100%).

25. The method in accordance with any one of claims 1 to 24 wherein the equivalent ratio of adjuvants selected from Broensted and Lewis acids to α-oxy carboxylic acid functions in the compound containing an α-oxy carboxylic acid group is in the range of from 0.01 : 1 to 20 : 1.

## Patentansprüche

1. Verfahren zur Herstellung von Verbindungen enthaltend eine α-Oxyphosphorgruppe mit der Formel:
R³[-O-C(R¹)(R²)ₘ(P(O)R^{a}R^{b})₂₋ₘ]ₙ -III-
umfassend die Schritte des Reagierens einer Verbindung enthaltend eine α-Oxycarbonsäuregruppe ausgewählt aus:
Glycolsäure;
Diglycolsäure;
Milchsäure;
Methoxyessigsäure;
Natrium-Methoxyacetat;
Butoxyessigsäure;
3,6-Dioxaheptansäure;
3,6,9-Trioxadecansäure;
3,6-Dioxadodecansäure;
3,6,9-Trioxaundecan-1,11-disäure;
5-Chlor-3-oxapentansäure;
5-Amino-3-oxapentansäure;
5-Phthalimido-3-oxapentansäure;
2-Tetrahydrofuransäure;
Methoxyphenylessigsäure;
2-Methoxybutan-1,4-disäure;
Kalium-trans-Phenylglycidat;
2-Allyloxypropionsäure;
2,2,2-Triflourethoxyessigsäure; und einer P-O-Komponente mit mindestens einer P-O-P-Einheit, wobei mindestens ein Phosphor die Oxidationsstufe +3 hat, wobei der zweite Phosphor der P-O-P-Einheit in der P-O-Komponente eine +3 oder +5 Oxidationsstufe hat und wobei mindestens 20 mol% aller P-Atome in der PO-Komponente die Oxidationsstufe +3 haben,
durch Zugeben der P-O-Komponente zu der Verbindung enthaltend eine α-Oxycarbonsäuregruppe, oder umgekehrt, in einem äquivalenten Verhältnis von α-Oxycarbonsäurefunktionen in der Verbindung enthaltend eine α-Oxycarbonsäuregruppe: P(III)-O-P(III,V)-Einheiten in der P-O-Komponente von 1:6 bis 2:1;
wobei R^{a} und R^{b} unabhängig ausgewählt sind aus einer C₁₋₂₀-Kohlenwasserstoffkette in verzweigter oder linearer Konfiguration; einer Silylgruppe unabhängig substituiert durch C₁₋₂₀-Kohlenwasserstoffgruppen in verzweigter, linearer, zyklischer oder aromatischer Konfiguration; oder OR" oder N(R")₂ wobei R" ausgewählt sein kann aus einer C₁₋₂₀-Kohlenwasserstoffkette in verzweigter oder linearer Konfiguration oder einer Silylgruppe unabhängig substituiert durch C₁₋₂₀-Kohlenwasserstoffgruppen in verzweigter, linearer, zyklischer oder aromatischer Konfiguration; falls R^{a} oder R^{b} eine N(R")₂-Gruppe ist, dann können die zwei R"-Gruppen miteinander mit einer R"-Gruppe, die eine C₁-₂₀-Kohlenwasserstoffkette in verzweigter oder linearer Konfiguration ist, verbunden sein, und das andere R" ist eine direkte Bindung; R^{a} und R^{b} können verbunden sein, dann ist R^{a} eine C₁₋₂₀-Kohlenwassertoffkette in verzweigter oder linearer Konfiguration und R^{b} ist eine direkte Bindung; falls R^{a} und R^{b} OR"-Gruppen sind, dann kann R" der ersten OR"-Gruppe eine C₁₋₂₀-Kohlenwasserstoffkette in verzweigter oder linearer Konfiguration und das R" der zweiten OR"-Gruppe eine direkte Bindung sein; falls R^{a} und R^{b} N(R")₂-Gruppen sind, dann kann eine R"-Gruppe der ersten N(R")₂-Gruppe eine C₁₋₂₀-Kohlenwasserstoffkette in verzweigter oder linearer Konfiguration sein und ein R" der zweiten N(R")₂-Gruppe ist eine direkte Bindung zu der R"-Gruppe der ersten N(R")₂-Gruppe;
oder
R^{a} und/oder R^{b} sind OM'; m und n können 1 sein;
M' ist dargestellt durch H oder Alkali, Erdalkali, Ammonium oder protonierte Aminspezies;
R¹ ist ausgewählt aus: H, Methyl, Phenyl, oder ist an R³ gebunden um einen OC₂- oder OC₄-Ring zu bilden;
R² ist H;
R³ ist ausgewählt aus H, gegebenenfalls substituiertes Alkyl oder ist an R¹ gebunden.

2. Verfahren gemäß Anspruch 1 für die Herstellung einer Verbindung enthaltend eine α-Oxyphosphorgruppe gefolgt durch Zugeben, nach Beendigung der Reaktion der P-O-Komponente mit der Verbindung enthaltend eine α-Oxycarbonsäuregruppe, eine minimale Anzahl an Molen von Wasser, die gleich zu der Differenz zwischen der Anzahl der Äquivalenten aller P-O-P-Bindungen in der P-O-Komponente ist und der Anzahl von Äquivalenten von OH-Gruppen in der α-Oxycarbonsäurefunktion der Verbindung enthaltend eine α-Oxycarbonsäuregruppe und Erhalten des gebildeten Produkts.

3. Verfahren gemäß Anspruch 1 oder 2, wobei die P-O-Komponente von Verbindungen der folgenden Klassen erhalten wird:
Klasse 1: P₄O₆P₄Oₙ (n = 7, 8, 9), Anhydride der Formel R^{a}R^{b}P-O-PR^{a}R^{b};
Klasse 2: H₃PO₃, H₃PO₄, Polyphosphorsäure, Metaphosphorsäure, Mono- oder Dialkylphosphatester (R'O)P(O)(OH)₂ oder (R'O)₂P(O)OH, harzgebundene Phosphonsäuren, anorganisch gebundene Phosphonsäuren, Phosphonsäuren R'P(O)(OH)₂, Monoalkylphosphonester R'P(O)(OR')H;
Klasse 3: Isohypophosphorsäure H(HO)P(O)-O-P(O)(OH)₂, Pyrophosphorsäure H₄P₂O₅;
Klasse 4: POCl₃, PCl₅, P₂O₅;
Klasse 5: R^{a}R^{b}PCl, R^{a}PCl₂, PCl₃;
Klasse 6: R^{a}R^{b}P(O)H, R^{a}P(O)(OH)H; und
Klasse 7: H₂O;
wobei R^{a} und R^{b} unabhängig ausgewählt sind aus einer C₁₋₂₀-Kohlenwasserstoffkette in verzweigter oder linearer Konfiguration; einer Silylgruppe unabhängig substituiert durch C₁₋₂₀-Kohlenwasserstoffgruppen in verzweigter, linearer, zyklischer oder aromatischer Konfiguration; oder OR" oder N(R")₂ wobei R" ausgewählt sein kann aus einer C₁₋₂₀-Kohlenwasserstoffkette in verzweigter oder linearer Konfiguration oder einen Silylgruppe unabhängig substituiert durch C₁₋₂₀-Kohlenwasserstoffgruppen in verzweigter, linearer, zyklischer oder aromatischer Konfiguration; falls R^{a} oder R^{b} eine N(R")₂-Gruppe ist, dann können die zwei R"-Gruppen miteinander mit einer R"-Gruppe, die eine C₁₋₂₀-Kohlenwasserstoffkette in verzweigter oder linearer, zyklischer Konfiguration ist, verbunden sein, und das andere R" ist eine direkte Bindung; R^{a} und R^{b} können verbunden sein, dann ist R^{a} eine C₁₋₂₀-Kohienwassertoffkette in verzweigter oder linearer Konfiguration und R^{b} ist eine direkte Bindung; falls R^{a} und R^{b} OR"-Gruppen sind, dann kann R" der ersten OR"-Gruppe eine C₁₋₂₀-Kohlenwasserstoffkette in verzweigter oder linearer Konfiguration und das R" der zweiten OR"-Gruppe eine direkte Bindung sein; falls R^{a} und R^{b} N(R")₂-Gruppen sind, dann kann eine R"-Gruppe der ersten N(R")₂-Gruppe eine C₁₋₂₀-Kohlenwasserstoffkette in verzweigter oder linearer Konfiguration sein und ein R" der zweiten N(R")₂-Gruppe ist eine direkte Bindung zu der R"-Gruppe der ersten N(R")₂-Gruppe;
entweder als individuelle Spezies enthaltend mindestens eine P-O-P-Einheit mit mindestens einem Phosphoratom in der Oxidationsstufe +3, oder durch Kombination von zwei oder mehr Verbindungen ausgewählt aus mindestens zwei unterschiedlichen Klassen, die die benötigte P(III)-O-P(III,V)-Einheit bilden, mit mindestens einem Phosphoratom in der Oxidationsstufe +3, wobei in Fällen mit drei oder mehr Verbindungen, mehr als eine Verbindung aus derselben Klasse ausgewählt werden kann, solange eine Verbindung von einer anderen Klasse verwendet wird, mit Kombinationen wie folgt:
Klasse 1 mit Klassen 2, 3, 4 + 7, 5 + 7, 6, 7;
Klasse 2 mit Klassen 3, 4, 4 + 7, 5, 5 + 7;
Klasse 3 mit Klassen 4, 4 + 7, 5, 5 + 7, 6;
Klasse 4 mit Klassen 5 + 7, 6, 6 + 7;
Klasse 5 mit Klassen 6, 7.

4. Verfahren gemäß irgendeinem der Ansprüche 1 bis 3, wobei mindestens 40 mol% der Phosphoratome in der P-O-Komponente die Oxidationsstufe +3 haben.

5. Verfahren gemäß irgendeinem der Ansprüche 1 bis 4, wobei die P-O-Komponente erhalten wird aus den folgenden Kombinationen:
- H₃PO₃ und P₂O₅;
- H₃PO₃ und PCl₃;
- R^{a}R^{b}P(O)H, wobei R^{a} und R^{b} Phenyl, OH, OCH₂CH₃ oder OCH₃ sind, und P₂O₅;
- P₄O₆ und H₂O; und
- P₄O₆ und H₃PO₃.

6. Verfahren gemäß irgendeinem der Ansprüche 1 bis 5, wobei die P-O-Komponente durch P₄O₆ dargestellt ist.

7. Verfahren gemäß irgendeinem der Ansprüche 1 bis 6, wobei das äquivalente Verhältnis von α-Oxycarbonsäurefunktionen in der Verbindung enthaltend eine α-Oxycarbonsäurgruppe: P(III)-O-P(III,V)-Einheiten in der P-O-Komponente von 1:2 bis 2:1 ist.

8. Verfahren gemäß Ansprüchen 1 und 2, wobei das Verfahren in Gegenwart eines Adjuvans ausgewählt aus der Gruppe: Lewis-Säuren; Broensted-Säuren; und Kombinationen davon, durchgeführt wird.

9. Verfahren gemäß Anspruch 8, wobei die Broensted-Säure eine homogene Sulfonsäure mit der Formel
(R*-(SO₃H)ₓ)
ist, wobei R* ausgewählt ist aus:
- C₁₋₂₄-Kohlenwasserstoffgruppen von linearer, verzweigter, zyklischer oder polyzyklischer Konfiguration, ggf. substituiert durch F und/oder CF₃-Gruppen, wobei x 1 bis 4 ist;
- C₆₋₁₄ aromatische oder alkylaromatische Gruppen, wobei die Alkylgruppe C₆₋₂₀ sein kann, wobei x 1 bis 3 für monoaromatische Systeme und 1 bis 4 für diaromatische und höhere Systeme ist;
- Diphenylether oder Diphenylmethan;
- C₆₋₂₀-Alkyldiphenylmethan;
- C₆₋₂₀-Alkyldiphenylether, wobei x 1 oder 2 ist.

10. Verfahren gemäß Anspruch 9, wobei die Sulfonsäure heterogen ist und ausgewählt ist aus:
- Sulfonsäuren, die auf Harze aufgepfropft sind umfassend Copolymere von Styrol, Ethylvinylbenzol und Divinylbenzol, die so funktionalisiert sind, um SO₃H-Gruppen auf die aromatischen Gruppen zu pfropfen;
- perfluorinierte Harze, die Sulfonsäuregruppen tragen;
- Sulfonsäuren, die auf Feststoffe aufgetragen sind, die ein freies Elektronenpaar haben; und
- Polymere und anorganische Feststoffe, die durch chemisches Pfropfen funktionalisiert sind und denen es möglich ist, Sulfonsäuren zu ergeben.

11. Verfahren gemäß Anspruch 8, wobei das Adjuvans eine Carbonsäure ist ausgewählt aus homogener und heterogener Carbonsäure.

12. Verfahren gemäß irgendeinem der Ansprüche 1 bis 11, wobei R^{a} und R^{b} unabhängig ausgewählt sind aus einer C₁₋₂₀-Kohlenwasserstoffkette in verzweigter oder linearer Konfiguration; oder OR" oder N(R")₂ wobei R" ausgewählt sein kann aus einer C₁₋₂₀-Kohlenwasserstoffkette in verzweigter oder linearer Konfiguration; falls R^{a} oder R^{b} eine N(R")₂-Gruppe ist, dann können die zwei R"-Gruppen miteinander mit einer R"-Gruppe, die eine C₁₋₂₀-Kohlenwasserstoffkette in verzweigter oder linearer Konfiguration ist, verbunden sein, und das andere R" ist eine direkte Bindung; R^{a} und R^{b} können verbunden sein, dann ist R^{a} eine C₁₋₂₀-Kohlenwassertoffkette in verzweigter oder linearer Konfiguration und R^{b} ist eine direkte Bindung; falls R^{a} und R^{b} OR"-Gruppen sind, dann kann R" der ersten OR"-Gruppe eine C₁₋₂₀-Kohlenwasserstoffkette in verzweigter oder linearer Konfiguration und das R" der zweiten OR"-Gruppe eine direkte Bindung sein; falls R^{a} und R^{b} N(R")₂-Gruppen sind, dann kann eine R"-Gruppe der ersten N(R")₂-Gruppe eine C₁₋₂₀-Kohelnwasserstoffkette in verzweigter oder linearer Konfiguration sein und ein R" der zweiten N(R")₂-Gruppe ist eine direkte Bindung zu der R"-Gruppe der ersten N(R")₂-Gruppe.

13. Verfahren gemäß irgendeinem der Ansprüche 1 bis 11, wobei R^{a} und R^{b} unabhängig ausgewählt sind aus einer C₁₋₂₀-Kohlenwasserstoffkette in verzweigter oder linearer Konfiguration; oder OR" oder N(R")₂, wobei R" ausgewählt sein kann aus einer C₁₋₂₀-Kohlenwasserstoffkette in verzweigter oder linearer Konfiguration.

14. Verfahren gemäß Anspruch 8, wobei das Adjuvans eine homogene Lewis-Säure ist:
- mit der Formel MXₙ, wobei M ein Übergangsmetall oder Hauptgruppenelement darstellt; X ein Anion einer Säure oder eines Säurederivats darstellt und n gleich der Oxidationsstufe von M ist.
- Einzelkomplexe von MXₙ
- Komplexe erhalten durch Kombination von MXₙ mit einem koordinierenden Liganden
- Verbindungen enthaltend Hauptgruppenelemente, in denen das Hauptgruppenelement die Lewis-Säurestelle darstellt
- Organometallspezies.

15. Verfahren gemäß Anspruch 8, wobei die homogene Broensted-Säure dargestellt ist durch eine anorganische Säure ausgewählt aus: H₃PO₃, H₃PO₄, Polyphosphorsäure, Metaphosphorsäure, Phosphonsäure R'P(O)(OH)₂.

16. Verfahren gemäß Anspruch 8, wobei die heterogene Broensted-Säure dargestellt ist durch eine anorganische Säure ausgewählt aus: amorphem Siliciumdioxid-Aluminiumoxid; Smectite, Tonerden, die mit anorganischer oder organischer Säure behandelt ist; säulenförmige Tone (pillared clays); Zeolite; und Metalloxide ZrO₂-TiO₂; TiO₂-SiO₂; und ZrO₂-SiO₂ in 1:1 molaren Kombinationen, harzgebundene Phosphonsäuren.

17. Verfahren gemäß irgendeinem der Ansprüche 1 bis 16, wobei ein Lösungsmittel vorhanden ist ausgewählt aus: fluorinierten und chlorinierten Kohlenwasserstoffen; aliphatischen Kohlenwasserstoffen; Ethern; aromatischen Lösungsmitteln; organischen Acetaten; organischen Nitrilen; Siliziumflüssigkeiten; und ionischen Flüssigkeiten.

18. Verfahren gemäß Anspruch 17, wobei das Lösungsmitteln ausgewählt ist aus: Anisol; Fluorbenzol; Chlorbenzol; Tetrachlorethan; Tetrachlorethylen; Dichlorethan; Dichlormethan; Diglyme; Glyme; Diphenyloxid; Polyalkylenglycolderivaten mit gekappten OH-Gruppen wie OR; Hexan; Heptan; Cyclohexan; Dibutylether; Diethylether; Diisopropylether; Dipenthylether; Butylmethylether; Tetrahydrofuran; Dioxan; Tetrahydropyran; Cyclopentylmethylether; Toluol; Benzol; Xylol; Ethylacetat; Acetonitril; Benzonitril; Polymethylphenylsiloxan; 1-n-Butylimidazoltrifluormethansulfonat und 1-Ethyl-3-methyl-1,3-imidazolbis(trifluormethylsulfonyl)imid.

19. Verfahren gemäß Anspruch 18, wobei das Lösungsmittel ausgewählt ist aus: Acetonitril; 1-Ethyl-3-methyl-1,3-imidazol-bis(trifluormethylsulfonyl)imid; und Chlorbenzol.

20. Verfahren gemäß irgendeinem der Ansprüche 1 bis 19, wobei die Reaktion in Gegenwart eines Lösungsmittels durchgeführt wird und die Anzahl von Äquivalenten von α-Oxycarbonsäurefunktionen in der Verbindung enthaltend eine α-Oxycarbonsäuregruppe zur Anzahl der Mole des Lösungsmittels von 1:0,1 bis 1:100 ist.

21. Verfahren gemäß Anspruch 8, wobei die heterogene Lewis-Säure durch beliebige Unterklassen, die durch Interaktion/Bindung von homogener Lewis-Säure mit polymeren organischen oder anorganischen Rückgraten (Backbones) dargestellt ist.

22. Verfahren gemäß irgendeinem der Ansprüche 1 bis 21, wobei das gasförmige CO, das durch die Bildung der Verbindung enthaltend eine α-Oxyphosphorgruppe frei wird, gesammelt wird.

23. Verfahren gemäß irgendeinem der Ansprüche 1 bis 22, wobei das Level an Chlor in der P-O-Komponente unter 200 Teilen pro Million (ppm) ist, ausgedrückt im Verhältnis zu der P-O-Komponente (100 %).

24. Verfahren gemäß Anspruch 6, wobei das Level an elementarem Phosphor, P₄, in dem P₄O₆ unter 200 Teilen pro Million (ppm) ist, ausgedrückt im Verhältnis zu P₄O₆ (100 %).

25. Verfahren gemäß irgendeinem der Ansprüche 1 bis 24, wobei das äquivalente Verhältnis an Adjuvantien ausgewählt aus Broensted- und Lewis-Säure zu α-Oxycarbonsäurefunktionen in der Verbindung enthaltend eine α-Oxycarbonsäuregruppe im Bereich von 0,01:1 zu 20:1 ist.

## Revendications

1. Procédé de fabrication de composés contenant un groupe α-oxy-phosphore ayant la formule :
R³[-O-C(R¹)(R²)ₘ(P(O)R^{a}R^{b})₂₋ₘ]ₙ -III-
comprenant les étapes de réaction d'un composé contenant un groupe acide α-oxy-carboxylique choisi parmi les suivants :
acide glycolique ;
acide diglycolique ;
acide lactique ;
acide méthoxyacétique ;
méthoxyacétate de sodium ;
acide butoxyacétique ;
acide 3,6-dioxaheptanoïque ;
acide 3,6,9-trioxadécanoïque ;
acide 3,6-dioxadodécanoïque ;
acide 3,6,9-trioxaundécane-l,11-dioique ;
acide 5-chloro-3-oxapentanoïque ;
acide 5-amino-3-oxapentanoïque ;
acide 5-phtalimido-3-oxapentanoïque ;
acide 2-tétrahydrofuroïque ;
acide méthoxy-phényl-acétique ;
acide 2-méthoxy-butane-1,4-dioïque ;
trans-phénylglycidate de potassium ;
acide 2-allyloxy-propionique ;
acide 2,2,2-trifluoroéthoxyacétique ;
et un composant P-O ayant au moins un fragment P-O-P, dans lequel au moins un phosphore a l'état d'oxydation +3, dans lequel le deuxième phosphore du fragment P-O-P dans le composant P-O a un état d'oxydation +3 ou +5, et dans lequel au moins 20 % en moles des atomes P totaux dans le composant P-O sont à l'état d'oxydation +3,
par ajout du composant P-O au composé contenant un groupe acide α-oxy-carboxylique, ou l'inverse, à un rapport équivalent de fonctions acide α-oxy-carboxylique dans le composé contenant un groupe acide a-oxy-carboxylique : fragments P(III)-O-P(III,V) dans le composant P-O de 1 : 6 à 2 : 1 ;
où R^{a} et R^{b} sont indépendamment choisis parmi une chaîne hydrocarbure en C₁₋₂₀ dans une configuration ramifiée ou linéaire ; un groupe silyle indépendamment substitué par des groupes hydrocarbures en C₁₋₂₀ dans une configuration ramifiée, linéaire, cyclique ou aromatique ; ou OR" ou N(R")₂ où R" peut être choisi parmi une chaîne hydrocarbure en C₁₋₂₀ dans une configuration ramifiée ou linéaire ou un groupe silyle indépendamment substitué par des groupes hydrocarbures en C₁₋₂₀ dans une configuration ramifiée, linéaire, cyclique ou aromatique ; si R^{a} ou R^{b} est un groupe N(R")₂, alors les deux groupes R" peuvent être reliés conjointement avec un groupe R" étant une chaîne hydrocarbure en C₁₋₂₀ dans une configuration ramifiée ou linéaire et l'autre R" étant une liaison directe ; R^{a} et R^{b} peuvent être reliés, alors R^{a} est une chaîne hydrocarbure en C₁₋₂₀ dans une configuration ramifiée ou linéaire et R^{b} est une liaison directe ; si R^{a} et R^{b} sont des groupes OR", alors R" du premier groupe OR" peut être une chaîne hydrocarbure en C₁₋₂₀ dans une configuration ramifiée ou linéaire et le R" du deuxième groupe OR" une liaison directe ; si R^{a} et R^{b} sont des groupes N(R")₂, alors un groupe R" du premier groupe N(R")₂ peut être une chaîne hydrocarbure en C₁₋₂₀ dans une configuration ramifiée ou linéaire et un R" du deuxième groupe N(R")₂ est une liaison directe au groupe R" du premier groupe N(R")₂ ; ou R^{a} et/ou R^{b} sont OM' ; m et n peuvent être 1 ;
M' est représenté par H ou une espèce alcaline, alcalino-terreuse, ammonium ou amine protonée ;
R¹ est choisi parmi : H, méthyle, phényle, ou lié à R³ pour former un cycle OC₂ ou OC₄ ;
R² est H ;
R³ est choisi parmi H, alkyle facultativement substitué, ou est lié à R¹.

2. Procédé selon la revendication 1 pour la fabrication d'un composé contenant un groupe α-oxy-phosphore suivi par l'ajout, après l'achèvement de la réaction du composant P-O avec le composé contenant un groupe acide α-oxy-carboxylique, d'un nombre minimal de moles d'eau égal à la différence entre le nombre d'équivalents de l'ensemble des lieurs P-O-P dans le composant P-O et le nombre d'équivalents de groupes OH dans la fonction acide α-oxy-carboxylique du composé contenant un groupe acide α-oxy-carboxylique et la récupération du produit formé.

3. Procédé selon la revendication 1 ou 2 dans lequel le composant P-O est obtenu à partir de composés des classes suivantes :
Classe 1 : P₄O₆, P₄Oₙ (n = 7, 8, 9), des anhydrides de formule R^{a}R^{b}P-O-PR^{a}R^{b} ;
Classe 2 : H₃PO₃, H₃PO₄, acide polyphosphorique, acide métaphosphorique, esters de mono ou dialkyle de phosphate (R'O)P(O)(OH)₂ ou (R'O)₂P(O)OH, acides phosphoniques liés à une résine, acides phosphoniques liés à un composé inorganique, acides phosphoniques R'P(O)(OH)₂, esters phosphoniques de monoalkyle R'P(O)(OR')H ;
Classe 3 : acide isohypophosphorique H(HO)P(O)-O-P(O)(OH)₂, acide pyrophosphoreux H₄P₂O₅ ;
Classe 4 : POCl₃, PCl₅, P₂O₅ ;
Classe 5 : R^{a}R^{b}PCl, R^{a}PCl₂, PCl₃ ;
Classe 6 : R^{a}R^{b}P(O)H, R^{a}P(O)(OH)H ; et
Classe 7 : H₂O ;
où R^{a} et R^{b} sont indépendamment choisis parmi une chaîne hydrocarbure en C₁₋₂₀ dans une configuration ramifiée ou linéaire ; un groupe silyle indépendamment substitué par des groupes hydrocarbures en C₁₋₂₀ dans une configuration ramifiée, linéaire, cyclique ou aromatique ; ou OR" ou N(R")₂ où R" peut être choisi parmi une chaîne hydrocarbure en C₁₋₂₀ dans une configuration ramifiée ou linéaire ou un groupe silyle indépendamment substitué par des groupes hydrocarbures en C₁₋₂₀ dans une configuration ramifiée, linéaire, cyclique ou aromatique ; si R^{a} ou R^{b} est un groupe N(R")₂, alors les deux groupes R" peuvent être reliés conjointement avec un groupe R" étant une chaîne hydrocarbure en C₁₋₂₀ dans une configuration ramifiée ou linéaire, cyclique et l'autre R" étant une liaison directe ; R^{a} et R^{b} peuvent être reliés, alors R^{a} est une chaîne hydrocarbure en C₁₋₂₀ dans une configuration ramifiée ou linéaire et R^{b} est une liaison directe ; si R^{a} et R^{b} sont des groupes OR", alors R" du premier groupe OR" peut être une chaîne hydrocarbure en C₁₋₂₀ dans une configuration ramifiée ou linéaire et le R" du deuxième groupe OR" une liaison directe ; si R^{a} et R^{b} sont des groupes N(R")₂, alors un groupe R" du premier groupe N(R")₂ peut être une chaîne hydrocarbure en C₁₋₂₀ dans une configuration ramifiée ou linéaire et un R" du deuxième groupe N(R")₂ est une liaison directe au groupe R" du premier groupe N(R")₂ ;
sous la forme d'une espèce individuelle contenant au moins un fragment P-O-P avec au moins un atome de phosphore dans l'état d'oxydation +3, ou par combinaison de deux composés ou plus choisis parmi au moins deux classes différentes, qui forment le fragment P(III)-O-P(III,V) requis, avec au moins un atome de phosphore dans l'état d'oxydation +3, de sorte que, dans les cas avec trois composés ou plus, plus d'un composé de la même classe peuvent être choisis, dans la mesure où un composé d'une autre classe est utilisé, avec des combinaisons comme suit :
classe 1 avec les classes 2, 3, 4 + 7, 5 + 7, 6, 7 ;
classe 2 avec les classes 3, 4, 4 + 7, 5, 5 + 7 ;
classe 3 avec les classes 4, 4 + 7, 5, 5 + 7, 6 ;
classe 4 avec les classes 5 + 7, 6, 6 + 7 ;
classe 5 avec les classes 6, 7.

4. Procédé selon l'une quelconque des revendications 1 à 3, dans lequel au moins 40 % en moles des atomes de phosphore dans le composant P-O sont dans un état d'oxydation +3.

5. Procédé selon l'une quelconque des revendications 1 à 4 dans lequel le composant P-O est obtenu à partir de combinaisons comme suit :
- H₃PO₃ et P₂O₅ ;
- H₃PO₃ et PCl₃ ;
- R^{a}Rb^{P}(O)H avec R^{a} et R^{b} étant phényle, OH, OCH₂CH₃ ou OCH₃ et P₂O₅ ;
- P₄O₆ et H₂O ; et
- P₄O₆ et H₃PO₃.

6. Procédé selon l'une quelconque des revendications 1 à 5 dans lequel le composant P-O est représenté par P₄O₆.

7. Procédé selon l'une quelconque des revendications 1 à 6, dans lequel le rapport équivalent de fonctions acide α-oxy-carboxylique dans le composé contenant un groupe acide α-oxy-carboxylique : fragments P(III)-O-P(III,V) dans le composant P-0 est de de 1 : 2 à 2 : 1.

8. Procédé selon les revendications 1 et 2 dans lequel le processus est conduit en présence d'un adjuvant choisi dans le groupe de : acides de Lewis ; acides de Brønsted ; et des combinaisons de ceux-ci.

9. Procédé selon la revendication 8 dans lequel l'acide de Brønsted est un acide sulfonique homogène ayant la formule (R*-(SO₃H)ₓ)
où R* est choisi parmi :
- des groupes hydrocarbures en C₁₋₂₄ de configuration linéaire, ramifiée, cyclique ou polycyclique, éventuellement substitués par des groupes F et/ou CF₃, où x est 1 à 4 ;
- des groupes aromatiques ou alkyl-aromatiques en C₆₋₁₄ dans lesquels le groupe alkyle peut être en C₆₋₂₀ où x est 1 à 3 pour des systèmes monoaromatiques et 1 à 4 pour des systèmes diaromatiques et supérieurs ;
- l'éther diphénylique ou le diphénylméthane ;
- (alkyle en C₆₋₂₀) diphénylméthane ;
- l'éther (alkyle en C₆₋₂₀)diphélnylique où x est 1 ou 2.

10. Procédé selon la revendication 9, dans lequel l'acide sulfonique est hétérogène, et est choisi parmi :
- des acides sulfoniques greffés sur des résines comprenant des copolymères de styrène, d'éthylvinylbenzène et de divinylbenzène fonctionnalisés de manière à greffer des groupes SO₃H sur les groupes aromatiques ;
- des résines perfluorées comportant des groupes acide sulfonique ;
- des acides sulfoniques déposés sur des solides ayant un doublet d'électrons non liant ; et
- des polymères et des solides inorganiques fonctionnalisés par greffage chimique capables de produire des acides sulfoniques.

11. Procédé selon la revendication 8 dans lequel l'adjuvant est un acide carboxylique choisi parmi des acides carboxyliques homogènes et hétérogènes.

12. Procédé selon l'une quelconque des revendications 1 à 11, dans lequel R^{a} et R^{b} sont indépendamment choisis parmi une chaîne hydrocarbure en C₁₋₂₀ dans une configuration ramifiée ou linéaire ; ou OR" ou N(R")₂ où R" peut être choisi parmi une chaîne hydrocarbure en C₁₋₂₀ dans une configuration ramifiée ou linéaire ; si R^{a} ou R^{b} est un groupe N(R")₂, alors les deux groupes R" peuvent être reliés conjointement, un groupe R" étant une chaîne hydrocarbure en C₁₋₂₀ dans une configuration ramifiée ou linéaire et l'autre R" étant une liaison directe ; R^{a} et R^{b} peuvent être reliés, alors R^{a} est une chaîne hydrocarbure en C₁₋₂₀ dans une configuration ramifiée ou linéaire et R^{b} est une liaison directe ; si R^{a} et R^{b} sont des groupes OR", alors R" du premier groupe OR" peut être une chaîne hydrocarbure en C₁₋₂₀ dans une configuration ramifiée ou linéaire et le R" du deuxième groupe OR" une liaison directe ; si R^{a} et R^{b} sont des groupes N(R")₂, alors un groupe R" du premier groupe N(R")₂ peut être une chaîne hydrocarbure en C₁₋₂₀ dans une configuration ramifiée ou linéaire et un R" du deuxième groupe N(R")₂ est une liaison directe avec le groupe R" du premier groupe N(R")₂.

13. Procédé selon l'une quelconque des revendications 1 à 11, dans lequel R^{a} et R^{b} sont indépendamment choisis parmi une chaîne hydrocarbure en C₁₋₂₀ dans une configuration ramifiée ou linéaire ; ou OR" ou N(R")₂ où R" peut être choisi parmi une chaîne hydrocarbure en C₁₋₂₀ dans une configuration ramifiée ou linéaire.

14. Procédé selon la revendication 8 dans lequel l'adjuvant est un acide de Lewis homogène :
- ayant la formule : MXₙ, où M représente un métal de transition ou un élément de groupe principal ; X est un anion d'un acide ou dérivé d'acide et n est égal à l'état d'oxydation de M,
- des complexes discrets de MXₙ,
- des complexes obtenus par combinaison de MXₙ avec un ligand de coordination
- des composés contenant des éléments de groupe principal, dans lesquels l'élément de groupe principal représente le site d'acide de Lewis,
- des espèces organométalliques.

15. Procédé selon la revendication 8 dans lequel l'acide de Brønsted homogène est représenté par un acide inorganique choisi parmi : H₃PO₃, H₃PO₄, l'acide polyphosphorique, l'acide métaphosphorique et des dérivés d'acide phosphonique R'P(O)(OH)₂.

16. Procédé selon la revendication 8 dans lequel l'acide de Brønsted hétérogène est représenté par un acide inorganique choisi parmi : la silice-alumine amorphe ; des smectites ; des argiles traitées par des acides inorganiques ou organiques ; des argiles pontées ; des zéolites ; et des oxydes de métal ZrO₂-TiO₂, TiO₂-SiO₂ ; ZrO₂-SiO₂ dans des combinaisons molaires 1:1, des acides phosphoniques liés à une résine.

17. Procédé selon l'une quelconque des revendications 1 à 16 dans lequel un solvant est présent choisi parmi : des hydrocarbures fluorés et chlorés ; des hydrocarbures aliphatiques ; des éthers ; des solvants aromatiques ; des acétates organiques ; des nitriles organiques ; des fluides de silicone ; et des liquides ioniques.

18. Procédé selon la revendication 17 dans lequel le solvant est choisi parmi les suivants : anisole ; fluorobenzène ; chlorobenzène ; tétrachloroéthane ; tétrachloroéthylène ; dichloroéthane ; dichlorométhane ; diglyme ; glyme ; diphényloxyde ; des dérivés de polyalkylène glycol avec des groupes OH coiffés tels que OR ; hexane ; heptane ; cyclohexane ; éther dibutylique ; éther diéthylique ; éther diisopropylique ; éther dipentylique ; éther butylméthylique ; tétrahydrofurane ; dioxane ; tétrahydropyrane ; éther cyclopentylméthylique ; toluène ; benzène ; xylène ; acétate d'éthyle ; acétonitrile ; benzonitrile ; polyméthylphényle siloxane ; trifluorométhanesulfonate de 1-n-butyl-imidazolium, et bis(trifluorométhyl-sulfonyl)imide de 1-éthyl-3-méthyl-1,3-imidazolium.

19. Procédé selon la revendication 18 dans lequel le solvant est choisi parmi les suivants : acétonitrile ; bis(trifluorométhylsulfonyl)imide de 1-éthyl-3-méthyl-1,3-imidazolium ; et chlorobenzène.

20. Procédé selon l'une quelconque des revendications 1 à 19, dans lequel la réaction est conduite en présence d'un solvant et le nombre d'équivalents de fonctions acide α-oxycarboxylique dans le composé contenant un groupe acide α-oxycarboxylique au nombre de moles de solvant est de 1 : 0,1 à 1 : 100.

21. Procédé selon la revendication 8, dans lequel l'acide de Lewis hétérogène est représenté par des sous-classes discrètes par interaction/liaison d'un acide de Lewis homogène avec des squelettes organiques ou inorganiques polymères.

22. Procédé selon l'une quelconque des revendications 1 à 21 dans lequel le CO gazeux libéré par la formation du composé contenant un groupe α-oxy-phosphore est collecté.

23. Procédé selon l'une quelconque des revendications 1 à 22, dans lequel le taux de chlore dans le composant P-O est inférieur à 200 parties par million (ppm) exprimé par rapport au composant P-0 (100 %).

24. Procédé selon la revendication 6 dans lequel le taux de phosphore élémentaire, P₄, dans P₄O₆ est inférieur à 200 parties par million (ppm) exprimé par rapport à P₄O₆ (100 %).

25. Procédé selon l'une quelconque des revendications 1 à 24 dans lequel le rapport équivalent d'adjuvants choisis parmi des acides de Brønsted et de Lewis aux fonctions acide α-oxycarboxylique dans le composé contenant un groupe acide α-oxycarboxylique est dans la plage de 0,01 : 1 à 20 : 1.
